(19) Europäisches Patentamt
European Patent Office
Office européen des brevets

(11) **EP 4 192 167 A1**

(12) **EUROPEAN PATENT APPLICATION**
published in accordance with Art. 153(4) EPC

(43) Date of publication:
**07.06.2023 Bulletin 2023/23**

(21) Application number: **21857447.3**

(22) Date of filing: **21.07.2021**

(51) International Patent Classification (IPC):
***H04W 72/04*** *(2023.01)*

(52) Cooperative Patent Classification (CPC):
**H04L 5/00; H04W 72/04; H04W 72/54**

(86) International application number:
**PCT/CN2021/107545**

(87) International publication number:
**WO 2022/037352 (24.02.2022 Gazette 2022/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.08.2020 CN 202010837798
24.12.2020 CN 202011552746**

(71) Applicant: **Huawei Technologies Co., Ltd.
Shenzhen, Guangdong 518129 (CN)**

(72) Inventors:
• **PENG, Lan**
**Shenzhen, Guangdong 518129 (CN)**
• **LI, Xueru**
**Shenzhen, Guangdong 518129 (CN)**
• **HE, Hongli**
**Shenzhen, Guangdong 518129 (CN)**

(74) Representative: **Körber, Martin Hans
Mitscherlich PartmbB
Patent- und Rechtsanwälte
Sonnenstraße 33
80331 München (DE)**

(54) **INFORMATION TRANSMISSION METHOD AND COMMUNICATION APPARATUS**

(57) This application provides an information transmission method and a communication apparatus. The method provided in embodiments of this application is applied to a first device, and the method includes: The first device performs interference measurement on a first time-frequency resource, to determine interference information, where the first time-frequency resource is determined based on configuration information of an interference measurement IM reference signal, the IM reference signal is used to measure interference of a channel, a time-frequency resource of the IM reference signal does not overlap a time-frequency resource of a non-zero power signal, the non-zero power signal is sent by a second device, and the second device is a device that has a same group identifier as the first device. When the interference information is greater than a preset threshold, the first device determines that the channel is in a non-idle state; or when the interference information is less than or equal to the threshold, the first device determines that the channel is in an idle state. In the method provided in embodiments of this application, the first device can determine whether the channel is idle, and then transmit data on the idle channel, to improve a network capacity and resource efficiency.

FIG. 8

## Description

This application claims priority to Chinese Patent Application No. 202010837798.0, filed with the China National Intellectual Property Administration on August 19, 2020 and entitled "LBT ENHANCEMENT METHOD", and claims priority to Chinese Patent Application No. 202011552746.5, filed with the China National Intellectual Property Administration on December 24, 2020 and entitled "INFORMATION TRANSMISSION METHOD AND COMMUNICATION APPARATUS", which are incorporated herein by reference in their entireties.

## TECHNICAL FIELD

This application relates to the communication field, and in particular, to an information transmission method and a communication apparatus.

## BACKGROUND

A sidelink-unlicensed (sidelink-unlicensed, SL-U) technology is an important branch of a cellular internet of things technology. Emergence of the SL-U technology creates a broad application prospect for internet of things applications, and disrupts a conventional cellular network communication architecture or even operation manner. For example, vehicle to x (vehicle to x, V2X) is a scenario and technology evolution on a basis of a sidelink (sidelink) architecture. An SL-U spectrum is an unlicensed spectrum. The unlicensed spectrum is open, and can be effectively utilized to improve performance and a rate of data transmission. The unlicensed spectrum is unlicensed, and different communication systems can perform transmission and contend for resources on the unlicensed spectrum.

One of typical SL-U scenarios is running by group (group), with support for locally grouping. In a locally grouping scenario, terminal devices in the group need to perform carrier sensing (carrier sensing, CS). However, there is still room for further improvement of a network capacity and resource efficiency in a current SL-U transmission process.

## SUMMARY

Embodiments of this application provide an information transmission method and a communication apparatus, to improve a network capacity and resource efficiency.

To resolve the foregoing technical problem, embodiments of this application provide the following technical solutions.

According to a first aspect, an embodiment of this application provides an information transmission method. The method may be performed by a first device or a chip used in the first device. The first device and a second device have a same group identifier, and data and signaling are transmitted between the first device and the second device. The method includes:

The first device performs interference measurement on a first time-frequency resource, to determine interference information, where the first time-frequency resource is determined based on configuration information of an interference measurement IM reference signal, the IM reference signal is used to measure interference of a channel, a time-frequency resource of the IM reference signal does not overlap a time-frequency resource of a non-zero power signal, the non-zero power signal is sent by the second device, and the second device is a device that has a same group identifier as the first device.

When the interference information is greater than a preset threshold, the first device determines that the channel is in a non-idle state.

Alternatively, when the interference information is less than or equal to the threshold, the first device determines that the channel is in an idle state.

In this embodiment of this application, the time-frequency resource of the IM reference signal does not overlap the time-frequency resource of the non-zero power signal, and the configuration information of the IM reference signal can be used to determine the first time-frequency resource. The first device performs interference measurement on the first time-frequency resource, to determine the interference information, where the interference information is inter-group interference on a group in which the first device and the second device are located, and the interference information can be used to determine whether the channel is in the idle state. Therefore, in this embodiment of this application, the first device can determine whether the channel is idle, where that the channel is idle specifically means that an inter-group channel is idle; and then transmit data on the idle inter-group channel, to improve a network capacity and resource efficiency.

Optionally, the IM reference signal is determined based on a group identifier of the second device.

In this embodiment of this application, different group identifiers correspond to different IM reference signals. The second device configures the IM reference signal based on the group identifier of the second device, and the first device and the second device have the same group identifier. The first device can identify, based on the group identifier of the first device, the IM reference signal corresponding to the group, so that the first device can identify IM reference signals corresponding to different group identifiers.

Optionally, the IM reference signal is a zero power reference signal.

In this embodiment of this application, energy measured by the first device on the first time-frequency resource is the interference information, that is, an interference signal measured on the first time-frequency resource is inter-group interference strength, and the inter-group interference strength can be referred to as inter-group/system (inter-group/system) interference.

Optionally, the first time-frequency resource includes, in time domain, only the last n sub-time units in a time unit in which the IM reference signal is located, n is less than or equal to N/2, N is a quantity of sub-time units in the time unit, and N is a positive integer.

In this embodiment of this application, the first time-frequency resource can include, in time domain, only the last n sub-time units in the time unit in which the IM reference signal is located, that is, the IM reference signal is not transmitted in the first (N-n) sub-time units in the time unit. For example, a time unit may be a slot (slot), and a sub-time unit may be a symbol (symbol).

Optionally, that the first device determines interference information includes:

The first device determines the interference information in the following manner:

$$P2=P1+10\log10(M2/M1),$$

where

P 1 represents an interference power obtained by the first device through measurement on the first time-frequency resource, P2 represents the interference information, M2 is a measurement bandwidth in a channel contention mechanism, and M1 is a bandwidth occupied by the IM reference signal.

When P2 is greater than the threshold, the channel is in the non-idle state.

Alternatively, when P2 is less than or equal to the threshold, the channel is in the idle state.

In this embodiment of this application, the first device obtains the interference power P 1 through measurement on the first time-frequency resource, performs conversion according to the foregoing formula, to obtain the interference information P2, obtains final interference information by using the foregoing formula, and determines, based on the interference information, whether the channel is idle.

According to a second aspect, an embodiment of this application further provides an information transmission method. The method may be performed by a second device or a chip used in the second device. The second device and a first device have a same group identifier, and data and signaling are transmitted between the second device and the first device. The method includes:

The second device generates a non-zero power signal, where a time-frequency resource of the non-zero power signal does not overlap a time-frequency resource of an interference measurement IM reference signal configured by the second device for the first device.

The second device sends the non-zero power signal to the first device, where the second device is a device that has a same group identifier as the first device.

Optionally, the interference measurement IM reference signal configured by the second device for the first device is determined based on a group identifier of the second device.

According to a third aspect, an embodiment of this application further provides an information transmission method. The method may be performed by a first device or a chip used in the first device. The first device and a second device have a same group identifier, and data and signaling are transmitted between the first device and the second device. The method includes:

The first device receives a first reference signal from the second device, and measures total energy of a channel within the last M sub-time units of a time unit in which the first reference signal is located, where M is a positive integer.

The first device obtains a receive power of the first reference signal in the time unit.

The first device determines first interference signal strength based on the total energy of the channel within the last M sub-time units in the time unit in which the first reference signal is located and the receive power of the first reference signal in the time unit.

When the first interference signal strength is greater than a preset threshold, the first device determines that the channel is in a non-idle state.

Alternatively, when the first interference signal strength is less than or equal to the threshold, the first device determines that the channel is in an idle state.

In this embodiment of this application, optionally, that the first device obtains a receive power of the first reference signal in the time unit includes:

The first device determines a frequency resource corresponding to the time unit in which the first reference signal is located.

The first device performs reference signal measurement on the frequency resource corresponding to the time unit in which the first reference signal is located, to obtain the receive power of the first reference signal in the time unit.

In this embodiment of this application, the first device can obtain, based on configuration information of the first reference signal, the frequency resource corresponding to the time unit in which the first reference signal is located. Then the first device performs reference signal measurement on the frequency resource corresponding to the time unit in which the first reference signal is located, and obtains the receive power of the first reference signal in the time unit based on a measurement result. For a reference signal measurement process, this embodiment of this application does not provide a detailed process. In this embodiment of this application, reference signal measurement is performed on the frequency resource corresponding to the first reference signal, to obtain the receive power of the first reference signal. This resolves a problem that the receive power of the first reference signal cannot be obtained.

Optionally, that the first device determines first interference signal strength based on the total energy of the channel within the last M sub-time units in the time unit in which the first reference signal is located and the receive power of the first reference signal in the time unit includes:

The first device determines, on a frequency resource on which data is transmitted in a group in which the first device and the second device are located, that the first interference signal strength is equal to a value obtained by subtracting the receive power of the first reference signal in the time unit from the total energy of the channel within the last M sub-time units in the time unit in which the first reference signal is located.

Alternatively, the first device determines, on a frequency resource on which no data is transmitted in the group in which the first device and the second device are located, that the first interference signal strength is equal to the total energy of the channel within the last M sub-time units in the time unit in which the first reference signal is located.

In this embodiment of this application, frequency resources of the group in which the first device is located may be classified into two types: one is a frequency resource on which data is transmitted in the group, and the other is a frequency resource on which no data is transmitted in the group. When there is the frequency resource on which the data is transmitted in the group, the first interference signal strength can be obtained by performing a subtraction operation between the total energy and the receive power. When there is the frequency resource on which no data is transmitted in the group, the first interference signal strength is the total energy, of the channel, received by the first device. In this embodiment of this application, the first interference signal strength can be determined regardless of whether the data is transmitted on the frequency resource in the group.

Optionally, after the first device determines first interference signal strength, the method further includes:

The first device adjusts the first interference signal strengthbased on a power correspondence between a reference signal and a data signal, to obtain first interference signal strength after the adjustment.

The method further includes:

The first device determines, based on the first interference signal strength after the adjustment, whether the channel is in the idle state.

In this embodiment of this application, the first interference signal strength determined by the first device is obtained based on the total energy of the last M sub-time units in which the first reference signal is located and the receive power corresponding to the first reference signal. To obtain more real channel environment interference, the first interference signal strength further needs to be adjusted. For example, a power of the reference signal can be aligned with a power of the data (data) signal, to obtain the power correspondence between the reference signal and the data signal. For example, the correspondence may be a proportional relationship between the reference signal and the data signal, and the proportional relationship may be obtained based on the configuration information. Finally, the first interference signal strength is adjusted based on the power correspondence between the reference signal and the data signal, so that the first interference signal strength obtained after the adjustment can represent the more real channel environment interference.

Optionally, the first reference signal is a first channel demodulation reference signal DMRS.

Optionally, the first reference signal is carried on a physical sidelink share channel or a physical sidelink control channel.

Optionally, the method further includes:

The first device converts the first interference signal strength into an inter-group interference power in the following manner:

$$P2=P1+10\log 10(M2/M1),$$

where

P1 represents the first interference signal strength, P2 represents the inter-group interference power, M2 is a measurement bandwidth in a channel contention mechanism, and M1 is a bandwidth occupied by the first reference signal.

When the inter-group interference power is greater than a preset threshold, the first device determines that the channel is in the non-idle state.

Alternatively, when the inter-group interference power is less than or equal to the threshold, the first device determines that the channel is in the idle state.

In this embodiment of this application, the first device obtains the interference power P1 through measurement on the first time-frequency resource, performs conversion according to the foregoing formula, to obtain the interference information P2, obtains final interference information by using the foregoing formula, and determines, based on the interference information, whether the channel is idle.

According to a fourth aspect, an embodiment of this application further provides an information transmission method. The method may be performed by a first device or a chip used in the first device. The first device and a second device have a same group identifier, and data and signaling are transmitted between the first device and the second device. The method includes:

The first device determines first interference signal strength of a channel used by the first device to send a message, where the first interference signal strength does not include second interference signal strength, the second interference signal strength is strength of an interference signal caused by the second device to the first device, the second device is a device that has a same group identifier as the first device, and the second device is not a device that sends a reference signal.

When the interference information is greater than a preset threshold, the first device determines that the channel is in a non-idle state.

Alternatively, when the interference information is less than or equal to the threshold, the first device determines that the channel is in an idle state.

According to a fifth aspect, an embodiment of this application further provides an information transmission method. The method may be performed by a first device or a chip used in the first device. The first device and a second device have a same group identifier, and data and signaling are transmitted between the first device and the second device. The method includes:

The first device measures interference information on the first time resource, and determines first interference information strength, where the first time resource is first n sub-time units at a moment at which the first device sends a data message or a control message, n is less than or equal to N/2, N is a quantity of sub-time units in a time unit in which the first device sends the data message or the control message, N is a positive integer, the first interference information strength does not include a second interference information strength, the second interference information strength indicates interference caused by the second device to the first device, and the second device is a device that has a same group identifier as the first device.

When the interference information is greater than a preset threshold, the first device determines that the channel is in a non-idle state.

Alternatively, when the interference information is less than or equal to the threshold, the first device determines that the channel is in an idle state.

According to a sixth aspect, an embodiment of this application further provides an information transmission method. The method may be performed by a first device and a second device or a chip used in the first device and a chip used in the second device. The first device and the second device have a same group identifier, and data and signaling are transmitted between the first device and the second device. The method includes:

The second device configures a first time-frequency resource, where the first time-frequency resource is configuration information of an interference measurement IM reference signal, and the IM reference signal is used to measure interference of a channel.

The second device generates a non-zero power signal, and sends the non-zero power signal to the first device.

The first device performs interference measurement on the first time-frequency resource, to determine interference information, where the first time-frequency resource is determined based on the configuration information of the interference measurement IM reference signal, the IM reference signal is used to measure interference of a channel, and a time-frequency resource of the IM reference signal does not overlap a time-frequency resource of the non-zero power signal.

When the first interference signal strength is greater than a preset threshold, the first device determines that the channel is in a non-idle state.

Alternatively, when the first interference signal strength is less than or equal to the threshold, the first device determines that the channel is in an idle state.

According to a seventh aspect, an embodiment of this application further provides an information transmission method. The method may be performed by a first device and a second device or a chip used in the first device and a chip used in the second device. The first device and the second device have a same group identifier, and data and signaling are transmitted between the first device and the second device. The method includes:

The second device sends a first reference signal to the first device.

The first device receives the first reference signal from the second device, and measures total energy of a channel within the last M sub-time units of a time unit in which the first reference signal is located, where M is a positive integer.

The first device obtains a receive power of the first reference signal in the time unit.

The first device determines first interference signal strength based on the total energy of the channel within the last M sub-time units in the time unit in which the first reference signal is located and the receive power of the first reference signal in the time unit.

When the first interference signal strength is greater than a preset threshold, the first device determines that the channel is in a non-idle state.

Alternatively, when the first interference signal strength is less than or equal to the threshold, the first device determines that the channel is in an idle state.

According to an eighth aspect, a communication apparatus is provided. The apparatus includes units configured to perform steps in any one of the methods performed by the first device in the first aspect, the third aspect and the fourth aspect, and the fifth aspect to the seventh aspect; or include units configured to perform steps in any possible implementation of the methods performed by the first device in the first aspect, the third aspect and the fourth aspect, and the fifth aspect to the seventh aspect.

According to a ninth aspect, a communication apparatus is provided. The apparatus includes units configured to perform steps in any one of the methods performed by the second device in the second aspect and the fifth aspect to the seventh aspect; or include units configured to perform steps in any possible implementations of the methods performed by the second device in the second aspect and the fifth aspect to the seventh aspect.

According to a tenth aspect, a communication apparatus is provided. The apparatus includes at least one processor and a memory, and the at least one processor is configured to perform the method in any one of the methods performed by the first device in the first aspect, the third aspect and the fourth aspect, and the fifth aspect to the seventh aspect; or configured to perform the method in any possible implementations of the methods performed by the first device in the first aspect, the third aspect and the fourth aspect, and the fifth aspect to the seventh aspect.

According to an eleventh aspect, a communication apparatus is provided. The apparatus includes at least one processor and a memory, and the at least one processor is configured to perform the method in any one of the methods performed by the second device in the second aspect and the fifth aspect to the seventh aspect; or configured to perform the method in any possible implementations of the methods performed by the second device in the second aspect and the fifth aspect to the seventh aspect.

According to a twelfth aspect, a communication apparatus is provided. The apparatus includes at least one processor and an interface circuit, and the at least one processor is configured to perform the method in any one of the methods performed by the first device in the first aspect, the third aspect and the fourth aspect, and the fifth aspect to the seventh aspect; or configured to perform steps in any possible implementations of the methods performed by the first device in the first aspect, the third aspect and the fourth aspect, and the fifth aspect to the seventh aspect.

According to a thirteenth aspect, a communication apparatus is provided. The apparatus includes at least one processor and an interface circuit, and the at least one processor is configured to perform the method in the steps of any one of the methods performed by the second device in the second aspect and the fifth aspect to the seventh aspect; or configured to perform steps in any possible implementations of the methods performed by the second device in the second aspect and the fifth aspect to the seventh aspect.

According to a fourteenth aspect, a terminal device is provided. The terminal device includes any communication apparatus provided in the eighth aspect, the tenth aspect, or the twelfth aspect.

According to a fifteenth aspect, a terminal device is provided. The terminal device includes any communication apparatus provided in the ninth aspect, the eleventh aspect, or the thirteenth aspect.

According to a sixteenth aspect, a computer program product is provided. The computer program product includes a computer program, and whenbeing executed by a processor, the computer program is configured to perform the method in any one of the first aspect to the seventh aspect; or configured to perform the method in any possible implementation of any one of the first aspect to the seventh aspect.

According to a seventeenth aspect, a computer-readable storage medium is provided. The computer-readable storage medium stores a computer program, and when being executed, the computer program is configured to perform the method in any one of the first aspect to the seventh aspect; or configured to perform the method in any possible implementation of any one of the first aspect to the seventh aspect.

According to an eighteenth aspect, a chip is provided. The chip includes a processor, configured to invoke a computer program from a memory and run the computer program, so that a communication device on which the chip is installed performs the method in any one of the first aspect to the seventh aspect; or perform the method in any possible implementation of any one of the first aspect to the seventh aspect.

It can be learned from the foregoing technical solutions that embodiments of this application have the following advantages.

In embodiments of this application, the first device performs interference measurement on the first time-frequency resource, to determine the interference information, where the first time-frequency resource is determined based on the configuration information of the interference measurement IM reference signal, the IM reference signal is used to measure the interference of the channel, the time-frequency resource of the IM reference signal does not overlap the time-frequency resource of the non-zero power signal, the non-zero power signal is sent by the second device, and the second device is a device that has a same group identifier as the first device. The first device determines, based on the interference information, whether the channel is in the idle state. In embodiments of this application, the time-frequency resource of the IM reference signal does not overlap the time-frequency resource of the non-zero power signal, and the configuration information of the IM reference signal can be used to determine the first time-frequency resource. The first device performs interference measurement on the first time-frequency resource, to determine the interference information, where the interference information is inter-group interference on the group in which the first device and the second device are located, and the interference information can be used to determine whether the channel is in the idle state. Therefore, in embodiments of this application, the first device can determine whether the channel is idle, for example, that the channel is idle specifically means that an inter-group channel is idle, and then transmit the data on the idle inter-group channel, to improve the network capacity and resource efficiency.

In embodiments of this application, the first device receives the first reference signal from the second device, and measures the total energy of the channel within the last M sub-time units in the time unit in which the first reference signal is located, where M is a positive integer. The first device obtains the receive power of the first reference signal in the time unit. The first device determines the first interference signal strength based on the total energy of the channel within the last M sub-time units in the time unit in which the first reference signal is located and the receive power of the first reference signal in the time unit. The first device determines, based on the first interference signal strength, whether the channel is in the idle state. In embodiments of this application, the second device obtains total receive energy in the last M sub-time units in the time unit in which the first reference signal is located, where the total energy is total energy (which may be referred to as total energy for short) received by the first device on the channel. The first device obtains the receive power of the first reference signal, where the receive power is effective power of the first reference signal on the channel. Therefore, the first interference signal strength can be determined based on the total energy and the receive power. The first interference signal strength is inter-group interference of the group in which the first device and the second device are located, and the first interference signal strength can be used to determine whether the channel is in the idle state. Therefore, in embodiments of this application, the first device can determine whether the channel is idle, for example, that the channel is idle specifically means that an inter-group channel is idle, and then transmit the data on the idle inter-group channel, to improve the network capacity and resource efficiency.

## BRIEF DESCRIPTION OF DRAWINGS

FIG. 1 is a schematic diagram of an SL-U scenario according to an embodiment of this application;
FIG. 2 is a schematic diagram of another SL-U scenario according to an embodiment of this application;
FIG. 3 is a schematic diagram of a mobile communication system according to an embodiment of this application;
FIG. 4a to FIG. 4c are a schematic diagram of establishing a group by a first device and another device according to an embodiment of this application;
FIG. 5a to FIG. 5c are a schematic diagram of establishing a group by a second device and another device according to an embodiment of this application;
FIG. 6 is a schematic diagram of establishing a group by a second device and a first device according to an embodiment of this application;
FIG. 7a is a schematic diagram of adding an uplink service to a GM 2 midway according to an embodiment of this application;
FIG. 7b is a schematic diagram in which a GM 1 and a GM 2 simultaneously perform a downlink service according to an embodiment of this application;
FIG. 8 is a schematic diagram of an interaction procedure of an information transmission method according to an embodiment of this application;
FIG. 9 is a schematic diagram of an interaction procedure of another information transmission method according to an embodiment of this application;
FIG. 10 is a schematic diagram of a scenario in which UE performs sidelink communication according to an embodiment of this application;
FIG. 11 is a schematic diagram of a scenario in which a group mechanism is used in sidelink communication according to an embodiment of this application;

FIG. 12a is a schematic diagram of a time-frequency resource pattern of an IM reference signal according to an embodiment of this application;
FIG. 12b is a schematic diagram of another time-frequency resource pattern of an IM reference signal according to an embodiment of this application;
FIG. 12c is a schematic diagram of still another time-frequency resource pattern of an IM reference signal according to an embodiment of this application;
FIG. 13 is a schematic diagram of an application scenario of calculating inter-group interference signal strength according to an embodiment of this application;
FIG. 14 is a schematic diagram of an application scenario of calculating inter-group interference signal strength according to an embodiment of this application;
FIG. 15 is a schematic diagram of a composition structure of a first device according to an embodiment of this application;
FIG. 16 is a schematic diagram of a composition structure of a second device according to an embodiment of this application;
FIG. 17 is a schematic diagram of a composition structure of a first device according to an embodiment of this application;
FIG. 18 is a schematic diagram of a composition structure of a first device according to an embodiment of this application; and
FIG. 19 is a schematic diagram of a composition structure of a second device according to an embodiment of this application.

## DESCRIPTION OF EMBODIMENTS

The following describes the technical solutions of this application with reference to the accompanying drawings.

In the descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions in embodiments of this application, "a plurality of" means two or more.

Terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

The technical solutions in embodiments of this application may be applied to various communication systems, for example, vehicle to everything (vehicle to everything, V2X), a device-to-device (device-to-device, D2D) communication system, a long term evolution (Long Term Evolution, LTE) system, an LTE frequency division duplex (Frequency Division Duplex, FDD) system, LTE time division duplex (Time Division Duplex, TDD), a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system, or new radio (New Radio, NR).

A terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, a user apparatus, a vehicle, a vehicle-mounted device, a roadside apparatus (road site unit, RSU), and the like in a V2X communication system. Alternatively, the terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, or a vehicle-mounted device. For example, as one or more components or units, the terminal device may be a vehicle-mounted module, a vehicle-mounted assembly, a vehicle-mounted component, a vehicle-mounted chip, or a vehicle-mounted unit that is built in a vehicle, and the vehicle uses the vehicle-mounted module, the vehicle-mounted assembly, the vehicle-mounted component, the vehicle-mounted chip, the vehicle-mounted unit, or a road side station that is built in the vehicle. Alternatively, the terminal device may be a terminal device in a future 5G network, a terminal device in a future evolved public land mobile network (Public Land Mobile Network, PLMN), or the like. This is not limited in embodiments of this application.

A network device (or may be referred to as a radio access network device) in embodiments of this application may be a device that can provide a random access function for a terminal device or a chip that can be disposed in the device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an access point (access point, AP), a wireless relay node, a wireless backhaul node, a transmission point (transmission and reception point, TRP, transmission point, TP), or the like in a wireless fidelity (wireless fidelity, Wi-Fi) system, or may be 5G, for example, NR or a gNB in a system, a transmission point (TRP or TP), one or a group of (including a plurality of antenna panels) antenna panels of a base station in a 5G system, a network node forming a gNB or a transmission point, for example, a baseband unit (BBU) or a distributed unit (DU, distributed unit), a network device in a future 5G network, or a network device in a future evolved PLMN network. This is not limited in embodiments of this application.

In embodiments of this application, the terminal device or the network device includes a hardware layer, an operating system layer running at the hardware layer, and an application layer running at the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include and/or carry an instruction and/or data.

V2X communication is an important key technology for implementing environment perception and information exchange in the internet of vehicles. Another device herein may be another vehicle, another infrastructure, a pedestrian, a terminal device, or the like. V2X communication may be considered as a special case of device-to-device (device to device, D2D) communication. A communication link between different terminal devices may be referred to as a sidelink (Sidelink, SL).

In V2X communication, two terminal devices that communicate with each other transmit control information and data through a PC5 interface. The PC5 interface may also be referred to as a PC5 reference point, and is an interface for communication between the two terminal devices. PC5 interface signaling (PC5 signaling, PC5 -S) may include direct communication request/accept (Direct Communication Request/Accept), a link identifier (Link Identifier), update request/response/acknowledgment (Update Request/Response/Ack), disconnect request/response (Disconnect Request/Response), link modification request/accept (Link Modification Request/Accept), and the like.

V2X is scenario extension and technology evolution on a basis of a sidelink (sidelink) architecture. A licensed (License) spectrum occupied by a sidelink needs to be coordinated with a spectrum resource of an LTE/NR network. As a result, an application scenario may be limited, and a rate cannot be further improved. An unlicensed (Unlicense) spectrum is open and can be effectively used to improve performance and rate. The unlicensed spectrum enables all systems to perform transmission and contend for resources on the unlicensed spectrum. This is referred to as an unlicensed sidelink (sidelink-unlicense, SL-U) technology.

An SL-U scenario is running by group (group), with support for locally grouping. For example, the SL-U scenario may include a group header (group header, GH) and a group member (group member, GM). SL-U has a plurality of application scenarios. For example, in a home scenario, terminal devices such as a mobile phone, a television, a personal computer, a tablet, a speaker, a band, and a headset all join a group, to perform communication through the SL-U in the home scenario. In a conference room scenario, terminal devices such as a large-screen device, a personal computer, a mobile phone, and a tablet may join a group, to perform communication through the SL-U in the conference scenario. In a group game scenario, terminal devices such as a personal computer, a tablet, and a mobile phone may join a group, to perform communication through the SL-U in the group game scenario.

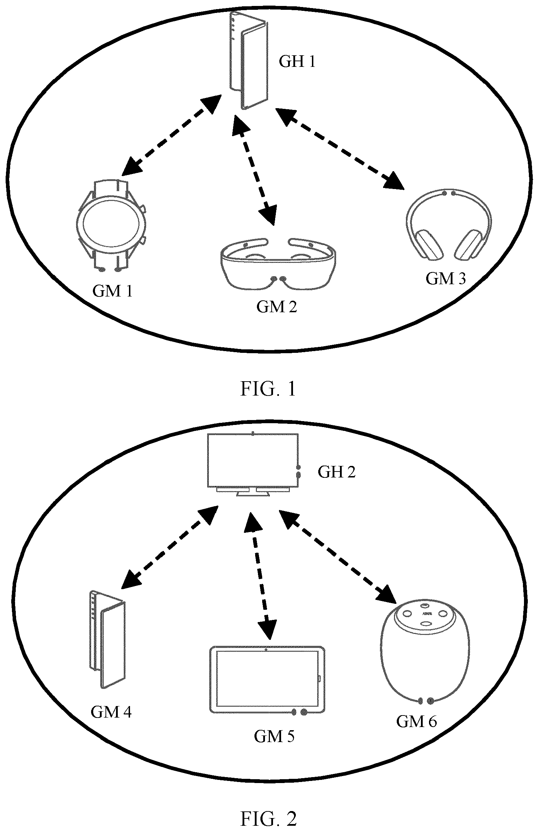

FIG. 1 is a schematic diagram of an SL-U scenario according to an embodiment of this application. A GH 1, a GM 1, a GM 2, and a GM 3 may be included. The GH 1 may be a mobile phone, the GM 1 may be a watch, the GM 2 may be glasses, and the GM 3 may be a headset. For example, FIG. 1 may be applied to the foregoing home scenario. FIG. 2 is a schematic diagram of another SL-U scenario according to an embodiment of this application. A GH 2, a GM 4, a GM 5, and a GM 6 may be included. The GH 2 may be a large-screen device, the GM 4 may be a mobile phone, the GM 5 may be a tablet, and the GM 6 may be a speaker. For example, FIG. 2 may be applied to the foregoing conference scenario.

The foregoing SL-U scenario which is running by group can not only well support a locally grouping scenario, but also reduce a resource collision probability. For example, in a heavy traffic load (heavy traffic load) scenario and a scenario with a large quantity of users, if user equipment (user equipment, UE) independently contends for resources, there is a high probability that a resource conflict occurs. If there is a group header to coordinate resource allocation, resource collision events can be greatly reduced. In addition, resource allocation efficiency can be improved, resources are negotiated at a large granularity between groups, and the group header in a group can perform allocation in a unified manner. In addition, communication performance of a sidelink can be improved. The group header can measure channel information and service load (load) of each member, and mutual information between members in the group, to better perform link control. In addition, a delay can be reduced, and information exchanged between a base station and the group header or the group member can be reduced, thereby reducing an air interface delay.

Operation of a group mechanism in the foregoing SL-U scenario requires a complete procedure mechanism. Key procedures and technologies include group procedure establishment, group header selection, group maintain (group maintain) mechanism, inter-group and intra-group resource allocation, and the like.

However, a current SL-U mechanism does not consider capability enhancement of a group header and a long distance between two group members, and intra-group spatial reuse cannot be used.

At the same time, currently, energy measured through CS transmitted by an SL-U includes all received signal energy that can be measured at the current moment, and intra-group interference and inter-group interference cannot be distinguished. When receive signal energy caused in a group is strong, UE fails to perform CS. In this case, the UE performs backoff, and as a result, intra-group spatial reuse fails.

In view of this, this application provides an information transmission method. When a group header has a multi-antenna capability, or the group header has a strong sidelink control information (sidelink control information, SCI) receiving capability, or two group members are far away from each other, intra-group spatial reuse (intra-group spatial reuse) can be enabled, to improve a network capacity and resource efficiency.

The method provided in embodiments of this application may be performed by a first device. For example, the first device may be a group member, and the group member may be the foregoing various terminal devices. The group member can determine first interference signal strength of a channel used by the group member to send a message, where the message sent by the group member may be a data message and/or a control message, a reference signal is sent by a device other than the group member in a group in which the group member is located, the first interference signal strength determined by the group member does not include second interference signal strength, the second interference signal strength is strength of an interference signal caused by the second device to the group member, and the second device is a device that has a same group identifier as the group member. Therefore, the first interference signal strength determined by the group member can represent inter-group interference signal strength, and receive energy caused by intra-group transmission is excluded. The group member determines, based on the first interference signal strength, whether the channel is in an idle state. Whether the channel is idle determined by using the first interference signal strength may indicate a real channel idle/busy state. The group member can perform intra-group spatial reuse (intra-group spatial reuse) when the channel is idle, to improve the network capacity and resource efficiency.

The execution body is not limited. The information transmission method provided in embodiments of this application may also be performed by a group header. A specific manner is similar to that described above, and details are not described herein again. Descriptions are provided below still by using an example in which the group member performs the foregoing information transmission method.

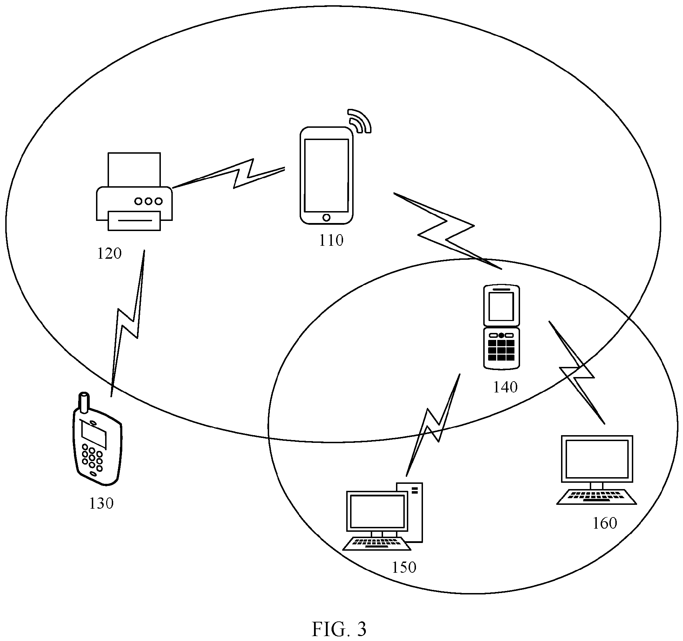

The method provided in this application may be applied to the scenario shown in FIG. 1 or FIG. 2. Certainly, the method may also be applied to another scenario having a group member and a group header. FIG. 3 is a schematic diagram of a mobile communication system according to an embodiment of this application. The mobile communication system 100 may include at least one group header 110 and at least one group member (group members 120, 130, 140, 150, and 160 shown in FIG. 3). The group members 130, 150, and 160 may be remote group members, and the group member 130 communicates with the group header 110 by using the group member 120. The group member 140 or the group member 160 communicates with the group header 110 by using the group member 140. The at least one group member may send uplink data or information to the group header 110, and the group header 110 may also send downlink data or information to the at least one group member. In addition, a plurality of group members may also form a communication system. For example, the group members 140, 150, and 160 may form a communication system, the group member 140 may also send downlink data or information to the group members 150 and 160, and the group members 150 and 160 may also send uplink data or information to the group member 140.

The at least one group header 110 shown in FIG. 3 and the at least one group member (the group members 120, 130, 140, 150, and 160 shown in FIG. 3) shown in FIG. 3 may be specifically a first device and a second device described subsequently in embodiments of this application. For example, the group header 110 may be the first device, and the group member 120 may be the second device; or the group member 130 may be the first device, and the group member 150 may be the second device; or the group member 160 may be the second device, and the group header 110 may be the first device. This is not limited herein.

The following briefly describes a process in which the first device establishes a communication connection to the second device. After the first device establishes the communication connection to the second device, the first device can transmit data or control signaling with a network device by using the second device.

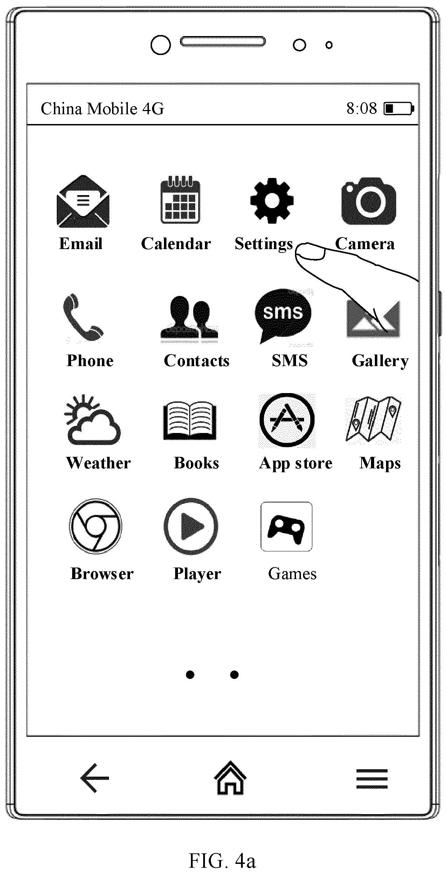

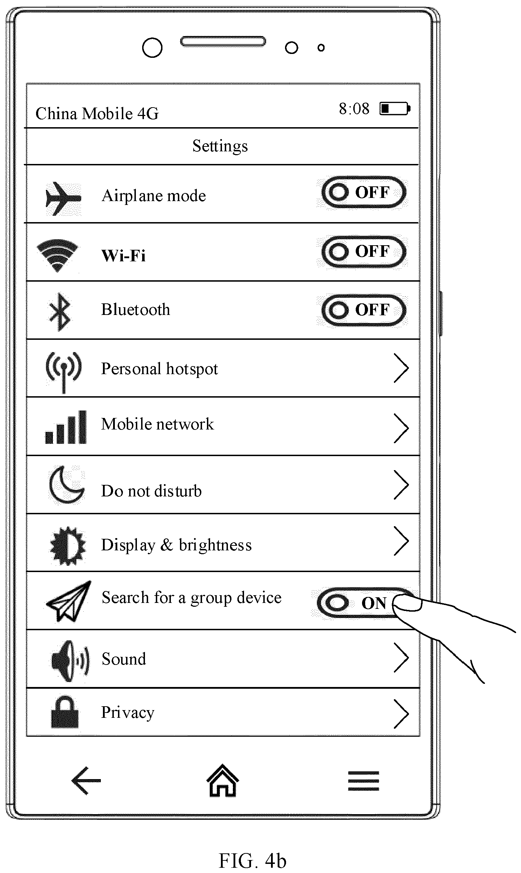

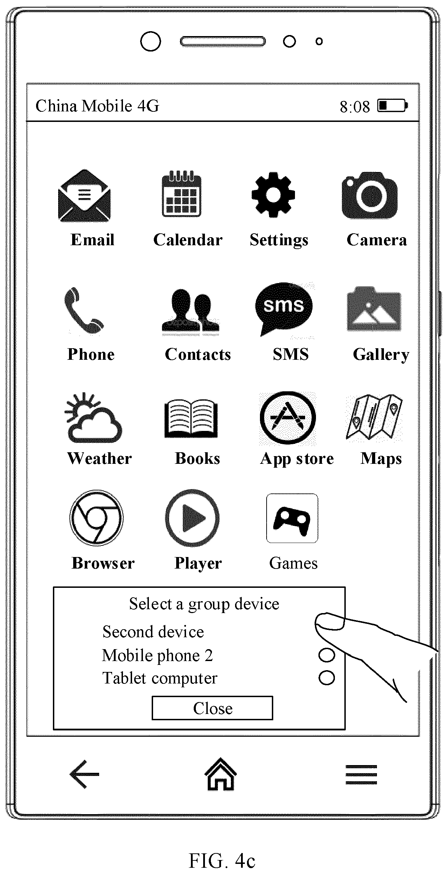

When the first device needs to establish a group, for example, when a user uses the first device, the user needs to establish a group with the first device and another device. As shown in FIG. 4a, the user may tap a "Settings" menu in an interface of the first device, and a "Search for a group device" menu is displayed, as shown in FIG. 4b. "Search for a group device" indicates that the user expects to communicate with the network device by using another terminal device. After the user opens the "search for a group device" menu, as shown in FIG. 4c, information about another device that can serve as a group device may be displayed to the user in the interface of the first device. For example, the first device may search for the another device by using a conventional communication technology such as a wireless network communication protocol, and display, to the user, the information about the another device that can serve as the group device of the first device. The another device may be a second device, a mobile phone 2, a tablet computer, or the like. The user may tap one of the other connectable devices. After the user taps the device (for example, the second device), it indicates that the first device determines to transmit the data and/or control signaling with the network device by using the second device. That is, the second device serves as the group device of the first device.

Optionally, when the information about the another device that can serve as the group device of the first device is displayed to the user, an identifier, a serial number, a model, or the like of the another device may be displayed. For example, the serial number may be a network access license number. This is not limited herein in this embodiment of this application.

Optionally, in this embodiment of this application, another process in which the first device searches for a group device and establishes a connection to the group device is as follows: There is a menu in system settings of the first device, for example, the menu is named "Connect to a group device" or has another name.

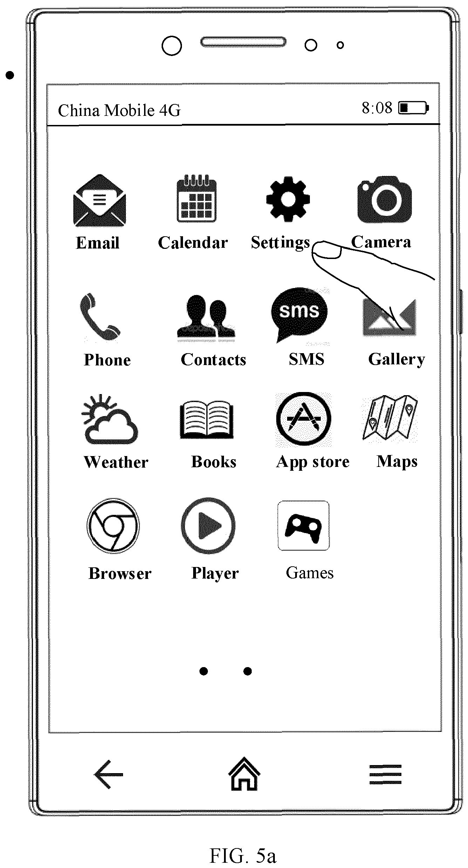

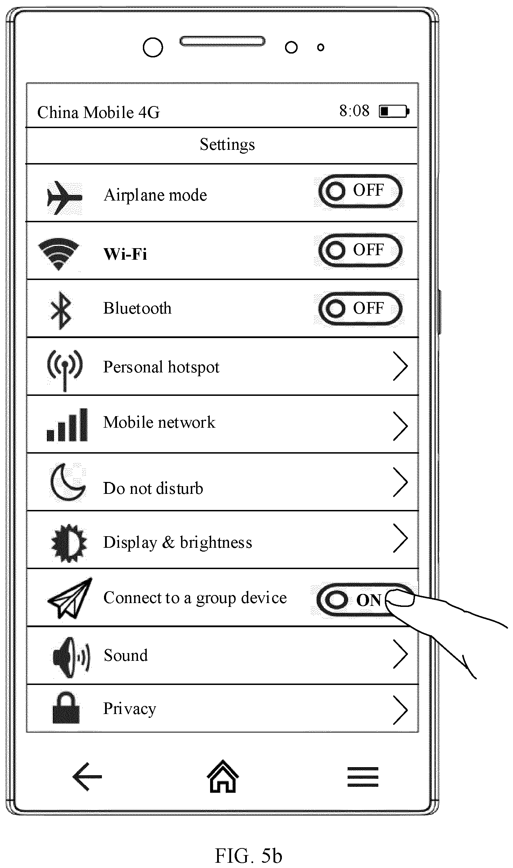

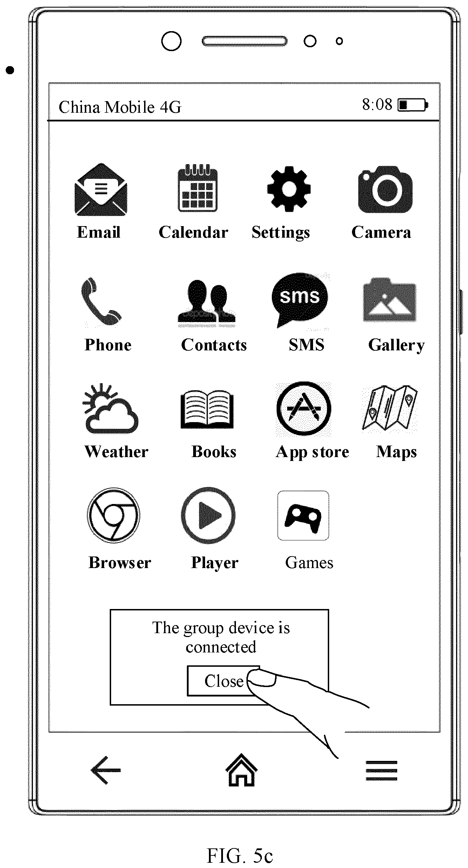

FIG. 5a is a schematic diagram of a home screen displayed by the first device. A user taps "Settings", and FIG. 5b is displayed. The user opens "Connect to a group device", it means that the user needs to connect to the group device, and transmit the data and/or control signaling with the network device by using the group device. After the user taps "Connect to a group device", the first device may automatically search for or connect to another nearby available device. After the connection succeeds, as shown in FIG. 5c, the first device may display a prompt "The group device is connected" to the user, to notify the user that the group device is connected. In this way, the group device can be connected without being perceived by the user, and user experience is improved.

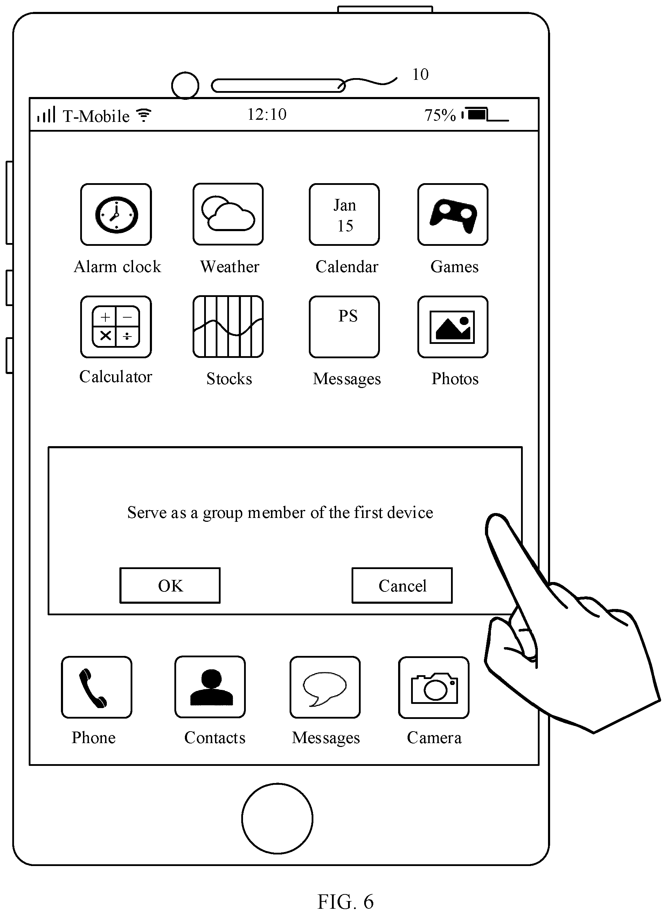

Optionally, when the user operates the first device and expects the second device to be the group member of the first device. Further, a prompt "Serve as a group member of the first device" may be displayed to a user of the second device in a display interface of the second device. As shown in FIG. 6, if the user of the second device taps "OK", it indicates that the second device is allowed to serve as the group member of the first device. If the user does not agree, the user may tap "No", and the first device cannot use the second device as the group member. For example, an application scenario shown in FIG. 6 may be a vehicle platooning scenario, and the first device and the second device may be vehicle terminals in the vehicle platooning scenario.

Optionally, in this embodiment of this application, the first device may be an intelligent wearable device used by the user, for example, a smartwatch or a smart band, and the second device may be a device used by the user, such as a mobile phone, a portable computer, a netbook, or a PDA. In this case, in the display interface of the second device, the prompt information "Serve as a group device of the first device" may be displayed to the user.

Optionally, in this embodiment of this application, the first device may search for, by using a wireless communication technology, such as a wireless local area network (wireless local area network, WLAN) (such as a wireless fidelity (wireless fidelity, Wi-Fi) network), Bluetooth (Bluetooth, BT), frequency modulation (frequency modulation, FM), a near field communication (near field communication, NFC) technology, or an infrared (infrared, IR) technology, the another device that can serve as the group device. This is not limited herein in this embodiment of this application.

Optionally, in a process in which the first device automatically searches for and connects to the another device as the group device, the first device may further automatically recommend, to the user based on a previous connection status with another device, the another device that can serve as the group device. For example, if the first device finds, after searching, that the another device that is connectable to the first device and that can serve as the group device is the same as the group device used by the user last time, the first device automatically connects to the group device that is the same as the group device used last time, that is, implements automatic connection.

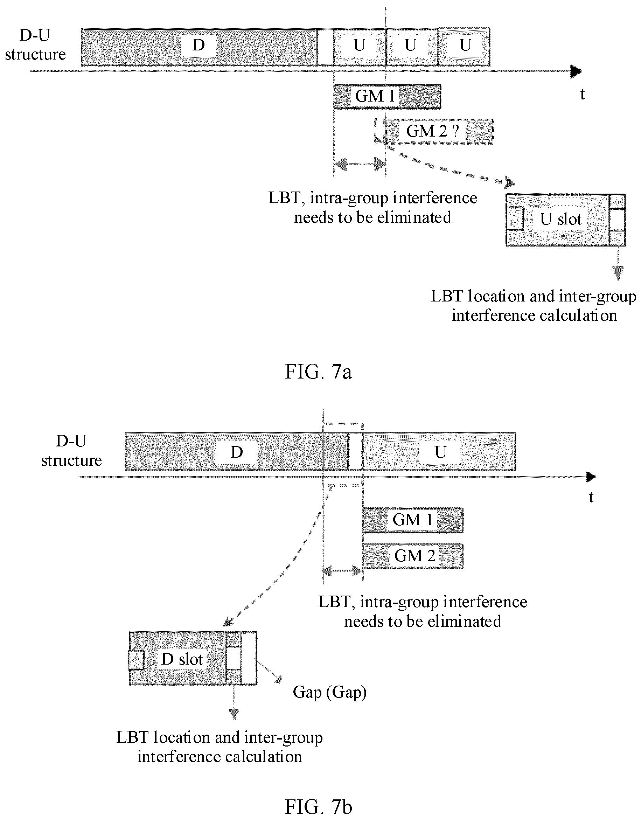

The following describes an application scenario of embodiments of this application by using an example. As shown in FIG. 7a and FIG. 7b, because of a peer relationship between UEs in a sidelink, downlink (uplink, U for short) and uplink (downlink, D for short) are not distinguished in the sidelink, and both are referred to as a sidelink. Based on the configured GH-GM relationship, to distinguish a GH->GM link from a GM->GH link, the GH->GM link is denoted as S-DL, and the GM->GH link is denoted as S-UL.

FIG. 7a shows a scenario 1. A D-U structure includes a downlink (uplink, U for short) time unit and an uplink (downlink, D for short) time unit. A gap (Gap) is set between a D time unit and a U time unit. A communication system includes a GH, a GM 1, and a GM 2. An uplink (UL) service of the GM 1 already exists, and the GM 2 joins the service halfway. The GM 1 is performing sidelink-uplink (sidelink-uplink, S-UL) transmission with the GH. For example, the GM 1 may perform S-UL transmission based on scheduling or radio resource control (radio resource control, RRC) configuration, and the transmission spans a plurality of time units (slots).

According to SCI scheduling or RRC configuration of the GH, the GM 2 needs to perform S-UL transmission in a second S-UL time unit. For example, there is a U slot before GM 2, a middle block on a left side of the U slot is represented as SCI, a right side of the U slot represents the last slot, and a middle block on a right side of the U slot represents a channel state information-interference measurement (channel state information-interference measurement, CSI-IM) pilot.

Before the GM 2 performs sending, carrier sensing (carrier sensing, CS) needs to be performed. In the conventional technology, CS, for example, LBT considers a signal from the GM 1 in a group as interference. As a result, the CS fails, the GM 2 performs backoff, and intra-group spatial reuse cannot be enabled. However, in embodiments of this application, the GM 2 does not consider a signal from the GM 1 in the group as interference, that is, does not use a power of the signal of the GM 1 as interference. This can avoid a CS failure of the GM 2, and enable intra-group spatial reuse.

FIG. 7b shows a scenario 2. A GM 1 and a GM 2 each simultaneously initiate an uplink (UL) service immediately after a downlink time unit (for example, a D slot), and the GM 1 and the GM 2 simultaneously perform S-UL transmission with a GH. The service is initiated in the first U slot after the D slot. For example, the service may be initiated based on GH scheduling or RRC configuration.

A D-U structure includes a downlink (uplink, U for short) time unit and an uplink (downlink, D for short) time unit. A gap (Gap) is set between a D time unit and a U time unit. For example, in the last D slot before a gap, a middle block on a left side of the D slot is represented as SCI, a right side of the D slot is represented as the last slot, and a middle block on the right side of the D slot is represented as a CSI-IM pilot.

Before the GM 1 and the GM 2 send data, CS needs to be performed. In the conventional technology, the CS considers signal energy of the D slot as interference. When received signal energy caused in a group is strong, CS fails and UE performs backoff. As a result, intra-group spatial reuse cannot be enabled. However, in embodiments of this application, the GM 1 and the GM 2 do not consider a signal from a GH in the group as interference, that is, do not use a power of the signal from the GH as interference. This can avoid CS failures of the GM 1 and the GM 2, and enable intra-group spatial reuse.

In some optional embodiments of this application, the first device may determine inter-group interference signal strength in a direct manner or an indirect manner, so that the first device can determine the idle state of the channel based on the inter-group interference signal strength. The direct manner means that the first device may obtain the inter-group interference signal strength through direct measurement. The indirect manner means that the first device first obtains total energy of the channel and a receive power of the reference signal on the channel, and finally calculates the inter-group interference signal strength based on the total energy of the channel and the receive power of the reference signal. In embodiments of this application, whether the channel is idle can be determined based on the inter-group interference signal strength. That the channel is idle specifically means that an inter-group channel is idle. Further, data can be transmitted on the inter-group idle channel, to improve the network capacity and resource efficiency.

First, the manner of directly determining the inter-group interference signal strength is described in detail. For example, a first device and a second device form a communication system. The first device may measure an interference signal, and the second device may send a non-zero power signal. For example, the non-zero power signal may be sent by a group header, or may be sent by another group member. This is not limited herein.

A direct interference measurement solution provided in embodiments of this application mainly includes the following procedure:

The second device configures a first time-frequency resource, where the first time-frequency resource is configuration information of an interference measurement IM reference signal, and the IM reference signal is used to measure interference of a channel.

The second device generates the non-zero power signal, and sends the non-zero power signal to the first device, where a time-frequency resource of the non-zero power signal does not overlap a time-frequency resource of the IM reference signal.

The first device measures interference information on the first time resource, and determines first interference information strength, where the first time resource is first n sub-time units at a moment at which the first device sends a data message or a control message, n is less than or equal to N/2, N is a quantity of sub-time units in a time unit in which the first device sends the data message or the control message, N is a positive integer, the first interference information strength does not include a second interference information strength, the second interference information strength indicates interference caused by the second device to the first device, and the second device is a device that has a same group identifier as the first device.

When the interference information is greater than a preset threshold, the first device determines that the channel is in the non-idle state.

Alternatively, when the interference information is less than or equal to the threshold, the first device determines that the channel is in the idle state.

In embodiments of this application, the first device performs interference measurement on the first time-frequency resource, to determine the interference information, where the first time-frequency resource is determined based on the configuration information of the interference measurement (interference measurement, IM) reference signal, the IM reference signal is used to measure the interference of the channel, the time-frequency resource of the IM reference signal does not overlap the time-frequency resource of the non-zero power signal, the non-zero power signal is sent by the second device, and the second device is a device that has a same group identifier as the first device. The first device determines, based on the interference information, whether the channel is in the idle state. In embodiments of this application, the time-frequency resource of the IM reference signal does not overlap the time-frequency resource of the non-zero power signal, and the IM reference signal can be used to determine the first time-frequency resource. The first device performs interference measurement on the first time-frequency resource, to determine the interference information, where the interference information is inter-group interference of the group in which the first device and the second device are located, and the interference information can be used to determine whether the channel is in the idle state. Therefore, in embodiments of this application, the first device can determine whether the channel is idle. The first device may be a group member, or may be a group header. This is not limited. The time-frequency resource herein may also be a time-frequency code resource. This is not limited herein.

The following describes in detail a method for determining the inter-group interference signal strength in the indirect manner. For example, a first device and a second device form a communication system. The second device may send a first reference signal, and the first device may obtain a receive power in a time unit in which the first reference signal is located, and measure total energy of a channel within the last M sub-time units in the time unit in which the first reference signal is located.

An indirect interference measurement solution provided in embodiments of this application mainly includes the following procedure:

The second device sends the first reference signal to the first device.

The first device receives the first reference signal from the second device, and measures the total energy of the channel within the last M sub-time units in the time unit in which the first reference signal is located, where M is a positive integer.

The first device obtains the receive power of the first reference signal in the time unit.

The first device determines first interference signal strength based on the total energy of the channel within the last M sub-time units in the time unit in which the first reference signal is located and the receive power of the first reference signal in the time unit.

When the first interference signal strength is greater than a preset threshold, the first device determines that the channel is in the non-idle state.

Alternatively, when the first interference signal strength is less than or equal to the threshold, the first device determines that the channel is in the idle state.

In embodiments of this application, the first device receives the first reference signal from the second device, and measures the total energy of the channel within the last M sub-time units in the time unit in which the first reference signal is located, where M is a positive integer. The first device obtains the receive power of the first reference signal in the time unit. The first device determines the first interference signal strength based on the total energy of the channel within the last M sub-time units in the time unit in which the first reference signal is located and the receive power of the first reference signal in the time unit. The first device determines, based on the first interference signal strength, whether the channel is in the idle state. In embodiments of this application, the first device obtains the total energy of the channel within the last M sub-time units in the time unit in which the first reference signal is located, where the total energy is total energy received by the first device on the channel. The first device obtains the receive power of the first reference signal, where the receive power is effective power of the first reference signal on the channel. Therefore, the first interference signal strength can be determined based on the total energy and the receive power, where the first interference signal strength is inter-group interference of the group in which the first device and the second device are located, and the first interference signal strength can be used to determine whether the channel is in the idle state. Therefore, in embodiments of this application, the first device can determine whether the channel is idle. It may be understood that the first device may be a group header, and the second device may be a group member; or the first device may be a group member, and the second device may be a group header.

In embodiments of this application, to better use a group, intra-group spatial reuse (Intra-group Spatial Reuse) may be enabled when a group header has a multi-antenna capability, or the group header has a strong SIC receiver capability, or two group members are physically far away from each other, to improve the network capacity and resource efficiency.

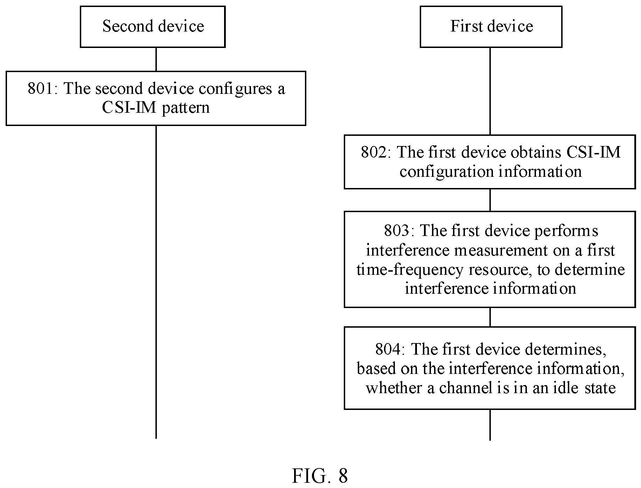

The following describes in detail an information transmission method provided in this application with reference to FIG. 8. The method may be applied to the scenarios shown in FIG. 1 to FIG. 7a and FIG. 7b. This is not limited in this embodiment of this application.

It should be understood that, in the following description, the methods in embodiments are described by using an example in which the methods in embodiments are performed by a first device and a second device. By way of example and not limitation, the methods may alternatively be performed by chips used in the first terminal device and the second terminal device.

As shown in FIG. 8, the information transmission method provided in some embodiments of this application is applied to a communication system. The communication system includes a first device and a second device, and the second device is a device that has a same group identifier as the first device. The method shown in FIG. 8 is a solution in which the first device directly performs interference measurement to obtain interference information, and the method includes step 801 to step 804.

801: Configure a CSI-IM pattern (Pattern).

For example, a CSI-IM pattern in a group is configured by a group header. CSI-IM patterns in a same group are the same, and CSI-IM patterns in different groups are different.

The second device and the first device are in a same group. The first device and the second device each may be a group member, or one is a group header and the other is a group member. In FIG. 8, descriptions are provided by using an example in which the second device is a group header and the first device is a group member.

In some optional embodiments of this application, the CSI-IM may be an IM reference signal in this embodiment of this application. A time-frequency resource of the IM reference signal is group specific (group specific), that is, time-frequency resource patterns configured for IM reference signals in a same group are the same, and time-frequency resource patterns configured for IM reference signals in different groups are different. Through the foregoing configuration, the first device can determine, based on a time-frequency resource corresponding to a received IM reference signal, a group to which the IM reference signal corresponds. This is not limited. The time-frequency resource herein may also be a time-frequency code resource.

802: The first device obtains CSI-IM configuration information.

The first device may obtain the CSI pattern configured by the group header. For example, the first device may obtain, from the second device, the CSI pattern configured by the second device. Therefore, the first device can obtain the CSI-IM configuration information based on the CSI pattern.

For example, the CSI-IM may be an IM reference signal in this embodiment of this application. The first device may obtain configuration information of the IM reference signal. A time-frequency resource of the IM reference signal does not overlap a time-frequency resource of a non-zero power signal, or a time-frequency code resource of the IM reference signal does not overlap a time-frequency code resource of a non-zero power signal. The non-zero power signal is sent by the second device, and the non-zero power signal is a signal whose transmit power is not zero.

In this embodiment of this application, the second device and the first device are in the same group. Due to a service requirement, the second device sends the non-zero power signal to another device in the group to which the second device belongs. For example, the second device may send the non-zero power signal in a broadcast manner. In addition, the second device may further send the non-zero power signal to the first device. Therefore, for the first device, the non-zero power signal sent by the second device is not an inter-group interference signal, but effective received energy in the group in which the first device is located.

It should be noted that, in this embodiment of this application, the first device only needs to measure inter-group interference on the CSI-IM, and intra-group interference may be caused by the group header or another group member in the group to which the first device belongs. Therefore, the first device can first obtain the CSI-IM configuration information, and then measure the inter-group interference based on the CSI-IM.

In some optional embodiments of this application, the interference measurement IM reference signal configured by the second device for the first device is determined based on a group identifier of the second device.

Different group identifiers correspond to different reference signals. The second device configures the IM reference signal based on the group identifier of the second device, and the first device and the second device have the same group identifier. The first device can identify, based on the group identifier of the first device, the IM reference signal corresponding to the group, so that the first device can identify IM reference signals corresponding to different group identifiers.

803: The first device performs interference measurement on a first time-frequency resource, to determine interference information.

The first time-frequency resource is determined based on the configuration information of the interference measurement IM reference signal, where the IM reference signal is used to measure interference of a channel, and the time-frequency resource of the IM reference signal does not overlap the time-frequency resource of the non-zero power signal.

The first device determines the first time-frequency resource based on the configuration information of the IM reference signal. The first device may perform interference measurement on the first time-frequency resource, to determine the interference information, where the interference information may be specifically inter-group interference signal strength.

The second device and the first device are in the same group, the first device and the second device each may be a group member, and the first device may measure the interference of the channel based on the IM reference signal. If there is the service requirement, the second device may send the non-zero power signal, where the non-zero power signal is a signal whose transmit power is not zero. The first device may obtain the configuration information of the IM reference signal, where the time-frequency resource of the IM reference signal does not overlap the time-frequency resource of the non-zero power signal. The non-overlapping herein may mean that a time-frequency resource pattern of the IM reference signal is different from a time-frequency resource pattern of the non-zero power signal.

In some optional embodiments of this application, the IM reference signal is determined based on the group identifier of the second device. That is, different group identifiers correspond to different IM reference signals. The second device configures the IM reference signal based on the group identifier of the second device, and the first device and the second device have the same group identifier. The first device can identify, based on the group identifier of the first device, the IM reference signal corresponding to the group, so that the first device can identify IM reference signals corresponding to different group identifiers.

In some optional embodiments of this application, the IM reference signal is a zero power-reference signal.

The IM reference signal is the zero power (zero power) reference signal. In this case, energy measured by the first device on the first time-frequency resource is the interference information, that is, an interference signal measured on the first time-frequency resource is the inter-group interference strength, and the inter-group interference strength can be referred to as inter-group/system (inter-group/system) interference.

In some optional embodiments of this application, the IM reference signal may be specifically a channel state information reference signal (channel state information reference signal, CSI-RS), that is, the IM reference signal may be represented as "CSI-RS IM". Because the CSI-RS IM has zero power, the energy measured by the first device on the corresponding time-frequency resource is the inter-group interference signal strength.

In some optional embodiments of this application, the first time-frequency resource includes, in time domain, only the last n sub-time units in a time unit in which the IM reference signal is located, n is less than or equal to N/2, N is a quantity of sub-time units in the time unit, and N is a positive integer.

This embodiment of this application may be used to adapt to an enhanced listen before talk (enhanced listen before talk, e-LBT) or listen before talk (listen before talk, LBT) scenario. For example, e-LBT enhances resource utilization in a group scenario, and uses spatial reuse to improve efficiency. The first time-frequency resource can include, in time domain, only the last n sub-time units in the time unit in which the IM reference signal is located, that is, the IM reference signal is not transmitted in the first (N-n) sub-time units in the time unit. For example, a time unit may be a slot (slot), and a sub-time unit may be a symbol (symbol). The example is not limited. Implementations of the time unit and the sub-time unit are not limited to the foregoing examples, and are applicable provided that a case in which the time unit is greater than the sub-time unit is met. For example, the first time-frequency resource includes, in time domain, only the last sub-time unit in the time unit in which the IM reference signal is located, that is, n may be 1. In this embodiment of this application, n may be another value. For example, n is 2.

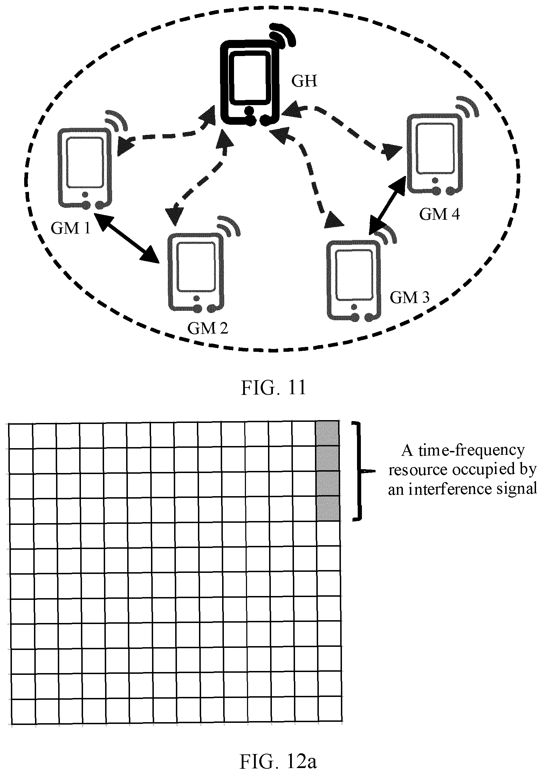

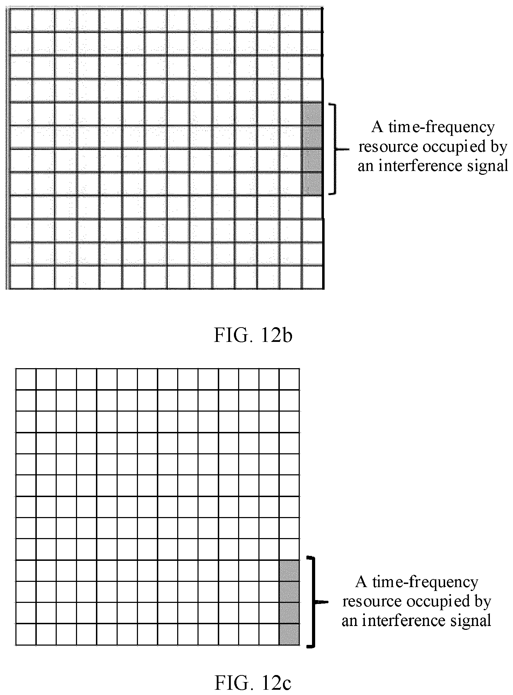

In this embodiment of this application, an implementation of the first time-frequency resource may be any one of subsequent legends in FIG. 12a to FIG. 12c. FIG. 12a to FIG. 12c illustrate three possible time-frequency resource patterns. For example, in FIG. 12a to FIG. 12c, all grids in each figure represent one physical resource block (physical resource block, PRB) including 14 symbols (symbols) and 12 resource elements (resource elements, REs), that is, 14 columns and 12 rows. In an optional time-frequency resource pattern, the possible pattern has four REs in frequency domain and is located in the last symbol in time domain, and may be distributed in three locations: upper, middle, and lower.

In some optional embodiments of this application, the IM reference signal is the channel state information reference signal (channel state information reference signal, CSI-RS). The CSI-RS is the zero power (zero power) signal, that is, transmit power is 0 at a corresponding time-frequency location. The signal is not limited. The IM reference signal provided in this embodiment of this application may alternatively be another signal. This is not limited herein.

In some optional embodiments of this application, step 803 in which the first device determines interference information includes:

The first device determines the interference information in the following manner:

$$P2 = P1 + 10\log 10(M2/M1),$$

where

P1 represents an interference power obtained by the first device through measurement on the first time-frequency resource, P2 represents the interference information, M2 is a measurement bandwidth in a channel contention mechanism, and M1 is a bandwidth occupied by the IM reference signal.

When P2 is greater than a preset threshold, the channel is in a non-idle state.

Alternatively, when P2 is less than or equal to the threshold, the channel is in an idle state.

For example, interference powers are averaged or summed on REs occupied by the IM reference signal to obtain P1.

For example, M1 is a bandwidth occupied by the IM reference signal, that is, the first device may obtain, based on the configuration information of the IM reference signal, the bandwidth occupied by the IM reference signal. M2 is a measurement bandwidth in a channel contention mechanism, and the measurement bandwidth in the channel contention mechanism is a pre-specified bandwidth. For example, the measurement bandwidth in the channel contention mechanism may be a measurement bandwidth defined by LBT. It may be understood that the bandwidth in this embodiment of this application may alternatively be represented as a quantity of resource elements (REs), a frequency domain resource size, or the like. This is not limited herein.

Optionally, M1 may be a quantity of REs occupied by the IM reference signal, and M2 may be a quantity of REs corresponding to a measurement bandwidth defined by LBT; or M1 may be a frequency resource occupied by the IM reference signal, and M2 may be a frequency resource occupied by an LBT measurement bandwidth.

In this embodiment of this application, the first device obtains the interference power P1 through measurement on the first time-frequency resource, performs conversion according to the foregoing formula, to obtain the interference information P2, obtains final interference information by using the foregoing formula, and determines, based on the interference information, whether the channel is idle.

804: The first device determines, based on the interference information, whether the channel is in the idle state.

In this embodiment of this application, after the first device determines the interference information, the first device can determine the inter-group interference signal strength of the first device. Therefore, the first device can determine whether the channel is in the idle state. That the channel is in the idle state has a same meaning as that of the channel being idle.

Optionally, when the interference information is greater than the preset threshold, the first device determines that the channel is in the non-idle state.

Alternatively, when the interference information is less than or equal to the threshold, the first device determines that the channel is in the idle state.

If the channel is in the idle state, the first device may perform intra-group spatial reuse on the channel, to improve resource utilization. Alternatively, if the channel is not idle, the first device cannot perform intra-group spatial reuse on the channel. In the foregoing example description, that the channel is idle specifically means that the inter-group channel is idle, and data can be transmitted on the inter-group idle channel, to improve the network capacity and resource efficiency.

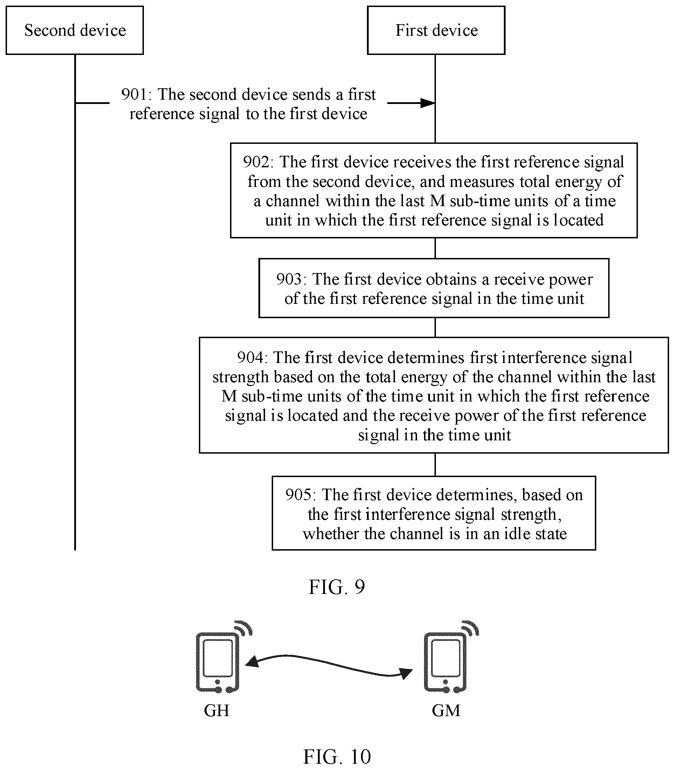

The following describes in detail an information transmission method provided in this application with reference to FIG. 9. The method may be applied to the scenarios shown in FIG. 1 to FIG. 7a and FIG. 7b. This is not limited in this embodiment of this application.

It should be understood that, in the following description, the methods in embodiments are described by using an example in which the methods in embodiments are performed by a first device and a second device. By way of example and not limitation, the methods may alternatively be performed by chips used in the first terminal device and the second terminal device.

As shown in FIG. 9, the information transmission method provided in some embodiments of this application is applied to a communication system. The communication system includes a first device and a second device, and the second device is a device that has a same group identifier as the first device. A solution shown in FIG. 9 is a solution in which the first device obtains inter-group interference signal strength through indirect measurement. The method includes step 901 to step 904.

901: The second device sends a first reference signal to the first device.

The second device and the first device belong to a same group. The first device and the second device each may be a group member, or one is a group header and the other is a group member. For example, the second device may send the first reference signal in the group in a broadcast manner, and the first device receives the first reference signal, and determines, based on the first reference signal, whether a channel is idle. For details, refer to descriptions of a first device side in subsequent embodiments.

In some optional embodiments of this application, the second device may broadcast sidelink control information (sidelink control information, SCI), where the SCI carries configuration information of the foregoing first reference signal, for example, the SCI carries a time-frequency resource pattern (pattern) of the first reference signal. The first device may receive the SCI, determine the time-frequency resource pattern of the first reference signal based on the SCI, and further receive the first reference signal sent by the second device.

In some optional embodiments of this application, the first reference signal is a demodulation reference signal (demodulation reference signal, DMRS). The signal is not limited. The first reference signal provided in this embodiment of this application may alternatively be another signal provided that the first device can measure the first reference signal. This is not limited herein.

In some optional embodiments of this application, the first reference signal is sent in a plurality of manners. For example, the first reference signal may be carried on a physical sidelink share channel (physical sidelink share channel, PSSCH) or a physical sidelink control channel (physical sidelink control channel, PSCCH). In subsequent embodiments, processes of measuring reference signals on the PSSCH and the PSCCH are separately described by using examples.

902: The first device receives the first reference signal from the second device, and measures total energy of a channel within the last M sub-time units of a time unit in which the first reference signal is located, where M is a positive integer.

In this embodiment of this application, the first device and the second device belong to a same group, and the first device and the second device each may be a group member, or one is a group header and the other is a group member. The second device may send the first reference signal, and the first device receives the first reference signal. To adapt to an e-LBT or LBT scenario, when receiving the first reference signal, the first device needs to measure the total energy of the channel within the last M sub-time units in the time unit in which the first reference signal is located. The total energy of the channel is total energy received by the first device on the channel. The time unit is a slot (slot), and the sub-time unit may be a symbol. The example is not limited. Implementations of the time unit and the sub-time unit are not limited to the foregoing examples, and are applicable provided that a case in which the time unit is greater than the sub-time unit is met. For example, total energy within the last sub-time unit of the time unit in which the first reference signal is located is measured, that is, M may be 1. M is not limited in this embodiment of this application, and may be another value, for example, M is 2.

In this embodiment of this application, the first device measures the total energy of the channel within the last M sub-time units in the time unit in which the first reference signal is located, where the total energy may be specifically a reference signal strength indicator (reference signal strength indicator, RSSI) measured by the first device. The processing is not limited. In this embodiment of this application, after the first device measures the total energy, the first device may further normalize the total energy. For example, the first device may normalize the total energy to each resource element (resource element, RE).

903: The first device obtains a receive power of the first reference signal in the time unit.

When the first device receives the first reference signal, the first device may further obtain the receive power of the first reference signal in the time unit. For example, the receive power may be reference signal receive power (reference signal received power, RSRP). The receive power of the first reference signal in the time unit is effective receive energy of the group to which the first device belongs.

In some optional embodiments of this application, step 903 in which the first device obtains a receive power of the first reference signal in the time unit includes:

A1: The first device determines a frequency resource corresponding to the time unit in which the first reference signal is located.

A2: The first device performs reference signal measurement on the frequency resource corresponding to the time unit in which the first reference signal is located, to obtain the receive power of the first reference signal in the time unit.

The first device can obtain, based on configuration information of the first reference signal, the frequency resource corresponding to the time unit in which the first reference signal is located. Then the first device performs reference signal measurement on the frequency resource corresponding to the time unit in which the first reference signal is located, and obtains the receive power of the first reference signal in the time unit based on a measurement result. For a reference signal measurement process, this embodiment of this application does not provide a detailed process. In this embodiment of this application, reference signal measurement is performed on the frequency resource corresponding to the first reference signal, to obtain the receive power of the first reference signal. This resolves a problem that the receive power of the first reference signal cannot be obtained.

904: The first device determines first interference signal strength based on the total energy of the channel within the last M sub-time units in the time unit in which the first reference signal is located and the receive power of the first reference signal in the time unit.

In this embodiment of this application, the first device determines, in the foregoing step 902, the total energy of the channel within the last M sub-time units in the time unit in which the first reference signal is located. It can be learned from the foregoing analysis that the total energy is the total energy of the channel carrying the first reference signal. The receive power of the first reference signal in the time unit is determined in the foregoing step 903. It can be learned from the foregoing analysis that the receive power is the effective received energy in the group to which the first device belongs. Therefore, the first interference signal strength can be determined based on the receive power and the total energy of the channel, where the first interference signal strength is an inter-group interference signal strength of the group to which the first device belongs.

In some optional embodiments of this application, step 904 in which the first device determines first interference signal strength based on the total energy of the channel within the last M sub-time units in the time unit in which the first reference signal is located and the receive power of the first reference signal in the time unit includes:

The first device determines, on a frequency resource on which data is transmitted in the group in which the first device and the second device are located, that the first interference signal strength is equal to a value obtained by subtracting the receive power of the first reference signal in the time unit from the total energy of the channel within the last M sub-time units in the time unit in which the first reference signal is located.

Alternatively, the first device determines, on a frequency resource on which no data is transmitted in the group in which the first device and the second device are located, that the first interference signal strength is equal to the total energy of the channel within the last M sub-time units in the time unit in which the first reference signal is located.

Frequency resources of the group in which the first device is located may be classified into two types: one is a frequency resource on which data is transmitted in the group, and the other is a frequency resource on which no data is transmitted in the group. When there is the frequency resource on which the data is transmitted in the group, the first interference signal strength can be obtained by performing a subtraction operation between the total energy and the receive power. When there is the frequency resource on which no data is transmitted in the group, the first interference signal strength is the total energy, of the channel, received by the first device. In this embodiment of this application, the first interference signal strength can be determined regardless of whether the data is transmitted on the frequency resource in the group.

In some optional embodiments of this application, after step 904 in which the first device determines first interference signal strength, the information transmission method provided in this embodiment of this application further includes the following step:

B 1: The first device adjusts the first interference signal strength based on a power correspondence between a reference signal and a data signal, to obtain first interference signal strength after the adjustment.

It can be learned from the foregoing description of step 904 that the first interference signal strength determined by the first device is obtained based on the total energy of the last M sub-time units in which the first reference signal is located and the receive power corresponding to the first reference signal. To obtain more real channel environment interference, the first interference signal strength further needs to be adjusted. For example, a power of the reference signal can be aligned with a power of the data (data) signal, to obtain the power correspondence between the reference signal and the data signal. For example, the correspondence may be a proportional relationship between the reference signal and the data signal, and the proportional relationship may be obtained based on the configuration information. Finally, the first interference signal strength is adjusted based on the power correspondence between the reference signal and the data signal, so that the first interference signal strength obtained after the adjustment can represent the more real channel environment interference.

905: The first device determines, based on the first interference signal strength, whether the channel is in an idle state.

In this embodiment of this application, after the first device determines the first interference signal strength, the first device can determine the inter-group interference signal strength of the first device. Therefore, the first device can determine whether the channel is in the idle state. That the channel is in the idle state has a same meaning as that of the channel being idle. Further, if the channel is in the idle state, the first device may perform intra-group spatial reuse on the channel, to improve resource utilization. Alternatively, if the channel is not idle, the first device cannot perform intra-group spatial reuse on the channel.

Optionally, when the first interference signal strength is greater than a preset threshold, the first device determines that the channel is in a non-idle state.

Alternatively, when the first interference signal strength is less than or equal to the threshold, the first device determines that the channel is in the idle state.

If the channel is in the idle state, the first device may perform intra-group spatial reuse on the channel, to improve resource utilization. Alternatively, if the channel is not idle, the first device cannot perform intra-group spatial reuse on the channel. In the foregoing example description, that the channel is idle specifically means that the inter-group channel is idle, and data can be transmitted on the inter-group idle channel, to improve a network capacity and resource efficiency.

Correspondingly, in an implementation scenario of performing step B1, step 905 in which the first device determines, based on the first interference signal strength, whether the channel is in an idle state includes: C1: The first device determines, based on the first interference signal strength after the adjustment, whether the channel is in the idle state.

The first device may adjust the first interference signal strength based on the power correspondence between the reference signal and the data signal, so that the first interference signal strength obtained after the adjustment can represent the more real channel environment interference. Whether the channel is in the idle state is determined based on the first interference signal strength after the adjustment, and whether the channel is idle can be determined more accurately.

In some optional embodiments of this application, step 905 in which the first device determines, based on the first interference signal strength, whether the channel is in an idle state includes: The first device converts the first interference signal strength into an inter-group interference power in the following manner:

$$P2 = P1 + 10\log10(M2/M1),$$

where

P1 represents the first interference signal strength, P2 represents the inter-group interference power, M2 is a measurement bandwidth in a channel contention mechanism, and M1 is a bandwidth occupied by the first reference signal.

When the inter-group interference power is greater than a preset threshold, the first device determines that the channel is in the non-idle state.

Alternatively, when the inter-group interference power is less than or equal to the threshold, the first device determines that the channel is in the idle state.

For example, M1 is a bandwidth occupied by the IM reference signal, that is, the first device may obtain, based on the configuration information of the IM reference signal, the bandwidth occupied by the IM reference signal. M2 is a measurement bandwidth in a channel contention mechanism, and the measurement bandwidth in the channel contention mechanism is a pre-specified bandwidth. For example, the measurement bandwidth in the channel contention mechanism may be a measurement bandwidth defined by LBT.

Optionally, M1 may be a quantity of REs occupied by the IM reference signal, and M2 may be a quantity of REs corresponding to a measurement bandwidth defined by LBT; or M1 may be a frequency resource occupied by the IM reference signal, and M2 may be a frequency resource occupied by an LBT measurement bandwidth.

In this embodiment of this application, the first device obtains the interference power P1 through measurement on the first time-frequency resource, performs conversion according to the foregoing formula, to obtain the interference information P2, generates interference information by using the foregoing formula, and determines, based on the interference information, whether the channel is idle.

For better understanding and implementation of the foregoing solutions in embodiments of this application, specific descriptions are provided below by using corresponding application scenarios as examples.

Embodiments of this application are applicable to an enhanced LBT scenario. During carrier sensing (carrier sensing, CS), a terminal device excludes receive energy generated during intra-group transmission, calculates only inter-group interference strength (and inter-system interference strength), namely, an inter-group (and inter-system) (inter-group/system) interference strength, and uses the obtained inter-group interference strength as an LBT threshold comparison value, to enable intra-group spatial reuse and improve resource utilization.

Embodiments of this application are divided into the following three embodiments to separately describe specific application scenarios of the information transmission methods.

To enable intra-group spatial reuse, the inter-group interference strength (or the inter-system interference strength) can be calculated in the following a plurality of implementations. One manner is to directly calculate the inter-group interference strength (and the inter-system interference strength). For details, refer to subsequent Embodiment 1. Another manner is to indirectly calculate the inter-group interference strength (and the inter-system interference strength). For details, refer to subsequent Embodiments 2 and 3. That is, the inter-group interference strength (or the inter-system interference strength) can be obtained by subtracting intra-group effective energy from total energy of the channel.

First, a system architecture to which embodiments of this application are applied is described. FIG. 10 is a schematic diagram of a scenario in which UE performs sidelink communication according to an embodiment of this application. In the scenario shown in FIG. 10, user equipments (user equipments, UEs) may communicate and send data with each other through a sidelink (Sidelink). FIG. 11 is a schematic diagram of a scenario in which a group mechanism is used in sidelink communication according to an embodiment of this application. A plurality of UEs also improve communication efficiency in a group (group). In the group, a group header can act as some base stations to coordinate management of the entire group. The UE is a device having a transmission capability. For example, the UE may be a terminal device, such as a mobile phone, a computer, a band, a smartwatch, a data card, or a sensor. From a perspective of a product form, the UE serving as the group header is also an implementation of the UE, but the UE serving as the group header has capabilities of some base stations, has a central control function, and is a device capable of configuring a resource and receiving data.

**Embodiment 1**

In an LBT enhancement scenario provided in this embodiment of this application, a method for supporting inter-group interference strength (and inter-system interference strength) measurement is directly measuring and obtaining interference. A specific process is described as follows:

For the UE configured with a CSI-RS IM reference signal, because of a zero power characteristic of the IM reference signal, signal energy obtained by the UE through measurement on a corresponding CSI-RS IM pattern is the inter-group interference strength (and the inter-system interference strength). Specifically, the first device obtains a first time-frequency resource of the IM reference signal. Because a power of the IM reference signal is zero, a total power is obtained through measurement on the first time-frequency resource. The total power is the inter-group interference (and inter-system interference), and is denoted as P1.

The CSI-RS IM time-frequency resource pattern is group-specific (specific). An optional method includes: Time-frequency resource patterns in the group are configured consistently, and CSI-RS IM time-frequency resource patterns in different groups are staggered. The time-frequency resource pattern entirely complies with a conventional CSI-RS IM time-frequency resource pattern in a new radio (new radio, NR) system, and adapts to the application scenario of e-LBT. Optionally, the time domain resource may be located on the last symbol in each slot. For example, the CSI-RS IM time-frequency resource pattern is the same as a current CSI-RS IM pattern 1 in NR.

FIG. 12a to FIG. 12c illustrate three possible time-frequency resource patterns. For example, in FIG. 12a to FIG. 12c, all grids in each figure represent one physical resource block (physical resource block, PRB) including 14 symbols (symbols) and 12 resource elements (resource elements, REs), that is, 14 columns and 12 rows. In an optional time-frequency resource pattern, the possible pattern has four REs in frequency domain and is located in the last symbol in time domain, and may be distributed in three locations: upper, middle, and lower. A symbol is a time unit, and an RE is a frequency domain unit.

Optionally, a frequency domain bandwidth of the time-frequency resource pattern has a plurality of implementations. For example, the frequency domain bandwidth of the time-frequency resource pattern may be all bandwidths supported by the GH and the GM. For another example, the frequency domain bandwidth of the time-frequency resource pattern may be a bandwidth of a UE-specific subchannel (specific subchannel), or the frequency domain bandwidth of the time-frequency resource pattern is a bandwidth of a group-specific subchannel. Optionally, a process of conversion between P 1 and the LBT threshold P2 is as follows:

The LBT threshold is normalized: $P2=P1+10\log10(M2/M1)$.

For a meaning of each parameter in the foregoing formula, refer to the description in the foregoing embodiment.

For example, all LBT thresholds in a current protocol use an LBT bandwidth (for example, 20 M) as a unit. M2 is a spectrum resource occupied by a measurement bandwidth defined by LBT, and M1 is a spectrum resource occupied by an actual measurement bandwidth of CSI-IM.

Optionally, M1 may be a quantity of REs occupied by the IM reference signal, and M2 may be a quantity of REs corresponding to a measurement bandwidth defined by LBT; or M1 may be a frequency resource occupied by the IM reference signal, and M2 may be a frequency resource occupied by an LBT measurement bandwidth.

**Embodiment 2**

In an LBT enhancement scenario provided in this embodiment of this application, a method for supporting inter-group interference strength (and inter-system interference strength) measurement is indirectly obtaining interference. A specific process is described as follows:

SCI is decoded (Decoded) in the group and a DMRS RSRP of a PSSCH is measured in the group. For example, SCI may be demodulated to obtain a DMRS location, a channel of a DMRS is estimated to obtain channel information H, and a modulo operation is performed on H to obtain the RSRP.

The intra-group effective energy is subtracted from the total energy of the channel obtained through measurement to obtain the inter-group interference strength (and inter-system interference strength), where the intra-group effective energy refers to the intra-group DMRS RSRP.

A specific process is as follows. The SCI is broadcast in the group, and any UE can detect the SCI. If the SCI in the current group cannot be detected, it indicates that inter-group interference is severe.

A calculation manner is as follows: On a frequency band on which data is transmitted in the group, the DMRS RSRP is measured based on a PSSCH DMRS pattern indicated in the SCI. If the PSSCH has a plurality of DMRS symbols, linear averaging can be performed on the plurality of symbols, and the RSRP is normalized to each RE. For example, there are 12 REs in one RB. A quantity of RBs scheduled for one piece of data is determined based on a service. For example, there may be one or more RBs. This is not limited herein.

A transmit power of the DMRS may be inconsistent with a transmit power of data (Data). To ensure that the power obtained through measurement represents the data power, the DMRS power needs to be aligned with the data power. This can ensure that signal energy obtained through measurement represents data energy.

On the frequency band on which no data is transmitted in the group, SumDmrsRsrp is 0. An RSSI obtained through measurement is the inter-group or inter-system interference strength (and inter-system interference strength) and is normalized to each RE.

The total energy RSSI is measured in the last symbol of the slot and normalized to each RE. To perform LBT, that total energy needs to be measured in the last slot may be limited.

The inter-group/system interference is denoted as P1, and P1=RSSI-SumDmrsRsrp, where

SumDmrsRsrp is a sum of RSRPs of all DMRS ports (Ports) in the group, and the RSSI is the total energy of the channel obtained through measurement, and includes the intra-group effective energy and the total energy of the inter-group/system interference.

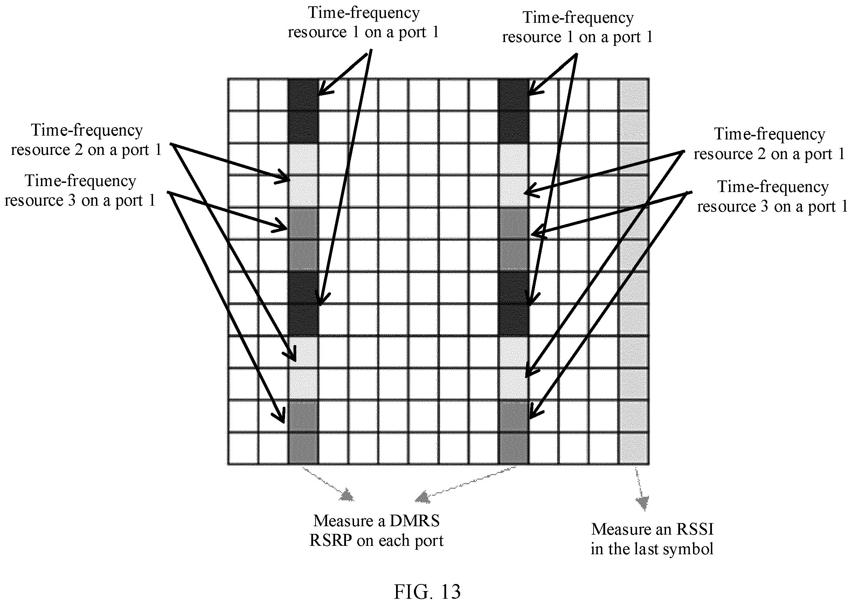

FIG. 13 is a schematic diagram of an application scenario of calculating inter-group interference signal strength according to an embodiment of this application. One UE may be configured with a plurality of DMRSs. For example, two columns in FIG. 13 indicate that DMRSs are measured on two ports, and FIG. 13 indicates three groups of orthogonal DMRS ports.

Optionally, a process of conversion between P 1 and the LBT threshold P2 is as follows:

The LBT threshold is normalized: P2=P1+10log10(M2/M1).

For a meaning of each parameter in the foregoing formula, refer to the description in the foregoing embodiment.

For example, all LBT thresholds in a current protocol use an LBT bandwidth (for example, 20 M) as a unit. M2 is a spectrum resource occupied by a measurement bandwidth defined by LBT, and M1 is a spectrum resource occupied by an actual measurement bandwidth of CSI-IM.

Optionally, M1 may be a quantity of REs occupied by the IM reference signal, and M2 may be a quantity of REs corresponding to a measurement bandwidth defined by LBT; or M1 may be a frequency resource occupied by the IM reference signal, and M2 may be a frequency resource occupied by an LBT measurement bandwidth.

**Embodiment 3**

In an LBT enhancement scenario provided in this embodiment of this application, a method for supporting inter-group interference strength (or inter-system interference strength) measurement is indirectly obtaining interference. A specific process is described as follows:

SCI is decoded in the group, a DMRS RSRP of a PSCCH is measured in the group, and the effective energy in the group is subtracted from the total energy of the channel obtained through measurement to obtain the inter-group interference strength (or inter-system interference strength).

A difference between Embodiment 3 and Embodiment 2 lies in that, in the second embodiment, the DMRS RSRP of the PSSCH in the group is measured, but in the third embodiment, the DMRS RSRP of the PSCCH in the group is measured.

A specific process is as follows. The SCI is broadcast in the group, and any UE can detect the SCI. If the SCI in the current group cannot be detected, it indicates that inter-group interference is severe.

A calculation manner is as follows: On a frequency band on which data is transmitted in the group, linear average is performed on a plurality of symbols based on the DMRS RSRP of the PSCCH obtained through detecting the SCI, and the RSRP is normalized to each RE. A PSCCH DMRS power needs to be aligned with that of a PSSCH to ensure that the signal energy obtained through measurement represents energy of the PSSCH.

On the frequency band on which no data is transmitted in the group, SumDmrsRsrp is 0. An RSSI obtained through measurement is the inter-group interference strength (or inter-system interference strength) and is normalized to each RE.

The total energy RSSI is measured in the last symbol of the slot and normalized to each RE.

The inter-group/system interference is denoted as P1, and P1=RSSI-SumDmrsRsrp.

SumDmrsRsrp is a sum of RSRPs of all DMRS ports (Ports) in the group, and the RSSI is the total energy of the channel obtained through measurement, and includes the intra-group effective energy and the total energy of the inter-group/system interference.

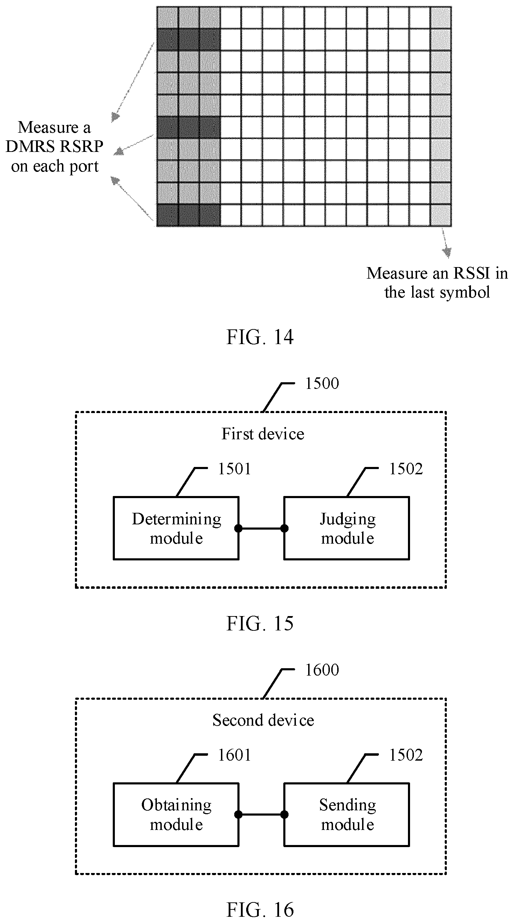

FIG. 14 is a schematic diagram of an application scenario of calculating inter-group interference signal strength according to an embodiment of this application. Dark-colored blocks pointed to by three arrows indicate DMRSs of a PSCCH, and a light-colored block indicates a PSCCH.

Optionally, a process of conversion between P 1 and the LBT threshold P2 is as follows:

The LBT threshold is normalized: P2=P1+10log10(M2/M1).

For a meaning of each parameter in the foregoing formula, refer to the description in the foregoing embodiment.

For example, all LBT thresholds in a current protocol use an LBT bandwidth (for example, 20 M) as a unit. M2 is a spectrum resource occupied by a measurement bandwidth defined by LBT, and M1 is a spectrum resource occupied by an actual measurement bandwidth of CSI-IM.

Optionally, M1 may be a quantity of REs occupied by the IM reference signal, and M2 may be a quantity of REs corresponding to a measurement bandwidth defined by LBT; or M1 may be a frequency resource occupied by the IM reference signal, and M2 may be a frequency resource occupied by an LBT measurement bandwidth.

It can be learned from the foregoing examples that, to enable intra-group spatial reuse, the LBT enhancement manner is used. During interference measurement, the interference caused by the intra-group energy is excluded, and only the inter-group interference strength (or the inter-system interference strength) is calculated and used as the LBT threshold comparison value. This improves the network capacity and resource efficiency.

It should be noted that for ease of brief description, the foregoing method embodiments are represented as a series of action combinations. However, a person skilled in the art should appreciate that this application is not limited to the described order of the actions, because according to this application, some steps may be performed in other orders or simultaneously. It should be further appreciated by a person skilled in the art that embodiments described in this specification all belong to preferable embodiments, and the related actions and modules are not necessarily required by this application.

To better implement the foregoing solutions in embodiments of this application, the following further provides a related apparatus for implementing the foregoing solutions.

FIG. 15 shows a first device 1500 according to an embodiment of this application. The first device 1500 includes:

a determining module 1501, configured to perform interference measurement on a first time-frequency resource, to determine interference information, where the first time-frequency resource is determined based on configuration information of an interference measurement IM reference signal, the IM reference signal is used to measure interference of a channel, a time-frequency resource of the IM reference signal does not overlap a time-frequency resource of a non-zero power signal, the non-zero power signal is sent by a second device, and the second device is a device that has a same group identifier as the first device; and

a judging module 1502, configured to: when the interference information is greater than a preset threshold, determine that the channel is in a non-idle state; or when the interference information is less than or equal to the threshold, determine that the channel is in an idle state.

In some embodiments of this application, the IM reference signal is determined based on a group identifier of the second device.

In some embodiments of this application, the IM reference signal is a zero power reference signal.

In some embodiments of this application, the first time-frequency resource includes, in time domain, only the last n sub-time units in a time unit in which the IM reference signal is located, n is less than or equal to N/2, N is a quantity of sub-time units in the time unit, and N is a positive integer.

In some embodiments of this application, the determining module is configured to determine the interference information in the following manner:

$$P2=P1+10\log10(M2/M1),$$

where

P 1 represents an interference power obtained by the first device through measurement on the first time-frequency resource, P2 represents the interference information, M2 is a measurement bandwidth in a channel contention mechanism, and M1 is a bandwidth occupied by the IM reference signal.

When P2 is greater than the preset threshold, the channel is in the non-idle state.

Alternatively, when P2 is less than or equal to the threshold, the channel is in the idle state.

FIG. 16 shows a second device 1600 according to an embodiment of this application. The second device 1600 includes:

an obtaining module 1601, configured to generate a non-zero power signal, where a time-frequency resource of the non-zero power signal does not overlap a time-frequency resource of an interference measurement IM reference signal configured by the second device for a first device; and

a sending module 1602, configured to send the non-zero power signal to the first device, where the second device is a device that has a same group identifier as the first device.

In some embodiments of this application, the interference measurement IM reference signal configured by the second device for the first device is determined based on a group identifier of the second device.

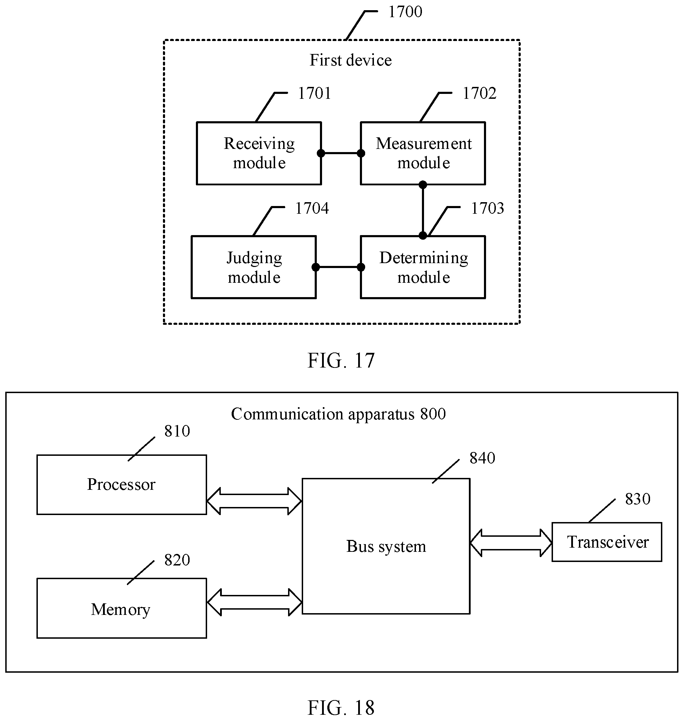

FIG. 17 shows a first device 1700 according to an embodiment of this application. The first device 1700 belongs to a communication system, the communication system further includes a second device, and the second device is a device that has a same group identifier as the first device. The first device 1700 includes:

a receiving module 1701, configured to receive a first reference signal from the second device;

a measurement module 1702, configured to measure total energy of a channel within the last M sub-time units of a time unit in which the first reference signal is located, where M is a positive integer;

a determining module 1703, configured to: obtain a receive power of the first reference signal in the time unit; and determine first interference signal strength based on the total energy of the channel within the last M sub-time units in the time unit in which the first reference signal is located and the receive power of the first reference signal in the time unit; and

a judging module 1704, configured to: when the first interference signal strength is greater than a preset threshold, determine that the channel is in a non-idle state; or when the first interference signal strength is less than or equal to the threshold, determine that the channel is in an idle state.

In some embodiments of this application, the determining module is configured to: determine a frequency resource corresponding to the time unit in which the first reference signal is located; and perform reference signal measurement on the frequency resource corresponding to the time unit in which the first reference signal is located, to obtain the receive power of the first reference signal in the time unit.

In some embodiments of this application, the determining module is configured to: determine, on a frequency resource on which data is transmitted in a group in which the first device and the second device are located, that the first interference signal strength is equal to a value obtained by subtracting the receive power of the first reference signal in the time unit from the total energy of the channel within the last M sub-time units in the time unit in which the first reference signal is located; or determine, on a frequency resource on which no data is transmitted in the group in which the first device and the second device are located, that the first interference signal strength is equal to the total energy of the channel within the last M sub-time units in the time unit in which the first reference signal is located.

In some embodiments of this application, the determining module is configured to adjust the first interference signal strength based on a power correspondence between a reference signal and a data signal, to obtain first interference signal strength after the adjustment.

The judging module is configured to determine, based on the first interference signal strength after the adjustment, whether the channel is in the idle state.

In some embodiments of this application, the first reference signal is a first channel demodulation reference signal DMRS.

In some embodiments of this application, the first reference signal is carried on a physical sidelink share channel or a physical sidelink control channel.

In some embodiments of this application, the determining module is configured to convert the first interference signal strength into an inter-group interference power in the following manner:

$$P2 = P1 + 10\log10(M2/M1),$$

where
P1 represents the first interference signal strength, P2 represents the inter-group interference power, M2 is a measurement bandwidth in a channel contention mechanism, and M1 is a bandwidth occupied by the first reference signal.

The judging module is configured to: when the inter-group interference power is greater than a preset threshold, determine that the channel is in the non-idle state; or when the inter-group interference power is less than or equal to the threshold, determine that the channel is in the idle state.

It should be further understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in embodiments of the foregoing methods may not be required, or some steps may be added. Alternatively, any two or more of the foregoing embodiments are combined. A modified, changed, or combined solution also falls within the scope of embodiments of this application.

It should be further understood that the foregoing descriptions of embodiments of this application emphasize differences between embodiments. For same or similar parts that are not mentioned, refer to each other. For brevity, details are not described herein again.

It should be further understood that a value of a sequence number of each of the foregoing processes does not mean an order of an execution sequence. The execution sequence of each process should be determined based on a function and internal logic of each process, and should not be construed as any limitation on the implementation processes of embodiments of this application.

It should be further understood that in embodiments of this application, "preset" and "predefined" may be implemented by pre-storing corresponding code or a corresponding table in a device (including, for example, a terminal or a network device) or in another manner that can be used to indicate related information. A specific implementation is not limited in this application.

It should be further understood that division into the manners, cases, categories, and embodiments in embodiments of this application is merely intended for ease of description, and should not constitute a particular limitation. The features in the manners, categories, cases, and embodiments may be combined without contradiction.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

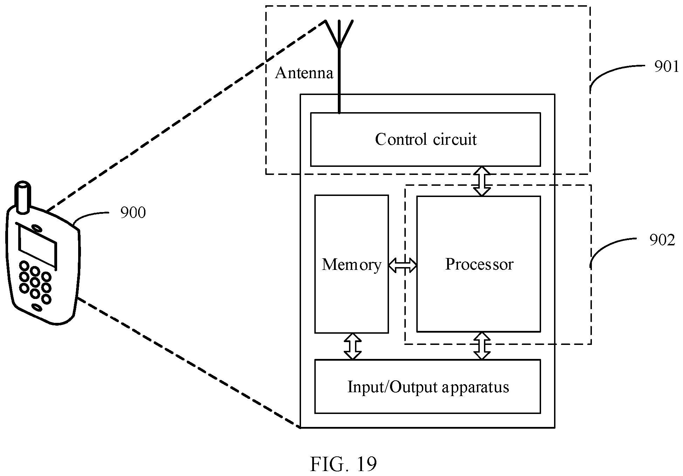

The foregoing describes in detail the methods provided in embodiments of this application with reference to FIG. 8 to FIG. 14. The following describes in detail communication apparatuses in embodiments of this application with reference to FIG. 18 and FIG. 19.

FIG. 18 is a schematic block diagram of a communication apparatus 800 according to an embodiment of this application.

As shown in FIG. 18, the communication apparatus 800 may include a processor 810, a memory 820, a transceiver 830, and a bus system 840. Components in the communication apparatus 800 are coupled together through the bus system 840. Besides including a data bus, the bus system 840 may further include a power bus, a control bus, a status signal bus, and the like. However, for clear description, various buses are marked as the bus system 840 in the FIG. 18. For ease of illustration, FIG. 18 merely shows an example of the bus system. In a possible implementation, the communication apparatus 800 may correspond to the first device described in the foregoing steps 802 to 804, or steps 902 to 905, or may be a chip or component used in the first device. Modules or units in the communication apparatus 800 are separately configured to perform actions or processing processes performed by the first device in steps 802 to 804 or steps 902 to 905. Alternatively, the communication apparatus 800 may correspond to the second device described in step 801 or step 901, or may be a chip or component used in the second device. Modules or units in the communication apparatus 800 are separately configured to perform actions or processing processes performed by the second device described in step 801 or step 901.

It should be understood that, for a specific process in which the units in the communication apparatus 800 perform the foregoing corresponding steps, refer to the foregoing descriptions related to the first device in the related embodiments shown in FIG. 15 or FIG. 17 with reference to steps 802 to 804, or steps 902 to 905. For brevity, details are not described herein again. Alternatively, for a specific process in which the units in the communication apparatus 800 perform the foregoing corresponding steps, refer to the foregoing descriptions related to the second device in the related embodiment shown in FIG. 16 with reference to step 801 or step 901. For brevity, details are not described herein again.

Optionally, the transceiver 830 may include a receiving unit (module) and a sending unit (module), configured to perform the foregoing steps 802 to 804, or steps 902 to 905, and steps of receiving information and sending information by the first device in the embodiment shown in FIG. 15 or FIG. 17; or configured to perform the foregoing step 801 or step 901, and steps of receiving information and sending information by the second device in the embodiment shown in FIG. 16.

It should be understood that, the transceiver 830 may be a transceiver machine, an input/output interface, or an interface circuit.

The communication apparatus 800 shown in FIG. 18 can implement steps performed by the first device or the second device in embodiments of the methods provided in this application. For similar descriptions, refer to the descriptions in the foregoing corresponding methods. To avoid repetition, details are not described herein again.

It should be further understood that the communication apparatus 800 shown in FIG. 18 may be a terminal device.

It should be further understood that division into the units in the communication apparatus is merely logical function division. In an actual implementation, all or some of the units may be integrated into one physical entity, or may be physically separated. In addition, all the units in the communication apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

For example, units in any one of the foregoing communication apparatuses may be configured as one or more integrated circuits for implementing the foregoing method, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the units in the apparatus may be implemented in a form of scheduling a program by the processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

FIG. 19 is a schematic diagram of a structure of a terminal device 900 according to this application. The communication apparatus 800 may be configured in the terminal device 900; or the communication apparatus 800 may be the terminal device 900. In other words, the terminal device 900 may perform actions performed by the first device in steps 802 to 804 or steps 902 to 905; or the terminal device 900 may perform the action performed by the second device in step 801 or step 901.

For ease of description, FIG. 19 shows only main components in the terminal device. As shown in FIG. 19, the terminal device 900 includes a processor, a memory, a control circuit, an antenna, and an input/output apparatus.

The processor is mainly configured to process a communication protocol and communication data, control the entire terminal device, execute a software program, and process data of the software program. For example, the processor is configured to support the terminal device to perform actions described in the foregoing embodiments of the indication method for transmitting a precoding matrix. The memory is mainly configured to store the software program and the data, for example, store a codebook described in the foregoing embodiment. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read the software program in the storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends outside, by using the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 19 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit are integrated into the processor in FIG. 19. A person skilled in the art may understand that the baseband processor and the central processing unit each may be an independent processor, and are interconnected by using technologies such as a bus. A person skilled in the art may understand that the terminal device may include a plurality of baseband processors to adapt to different network standards, and the terminal device may include a plurality of central processing units to enhance processing capabilities of the terminal device, and components in the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have sending and receiving functions may be considered as a transceiver unit 901 in the terminal device 900, and the processor having a processing function may be considered as a processing unit 902 in the terminal device 900. As shown in FIG. 19, the terminal device 900 includes the transceiver unit 901 and the processing unit 902. The transceiver unit may also be referred to as a transceiver machine, a transceiver, a transceiver apparatus, or the like. Optionally, a component that is in the transceiver unit 901 and that is configured to implement a receiving function may be considered as a receiving unit, and a component that is in the transceiver unit 901 and that is configured to implement a sending function may be considered as a sending unit. In other words, the transceiver unit 501 includes the receiving unit and the sending unit. For example, the receiving unit may also be referred to as a receiver, a receive machine, or a receiving circuit, and the sending unit may also be referred to as a transmitter, a transmit machine, or a transmitting circuit.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement embodiments, all or some of the foregoing embodiments may be implemented in a form of a computer program product. The computer program product includes one or more computer instructions or computer programs. When the program instructions or the computer programs are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment further provides a computer storage medium. The computer storage medium stores computer instructions. When the computer instructions are run on a communication apparatus, the communication apparatus is enabled to perform the foregoing related method steps to implement the signaling radio bearer configuration method and the sidelink data packet transmission method in the foregoing embodiments.

An embodiment further provides a computer program product. When the computer program product runs on a computer, the computer is enabled to perform the foregoing related steps to implement the signaling radio bearer configuration method and the sidelink data packet transmission method in the foregoing embodiments.

In addition, an embodiment of this application further provides an apparatus. The apparatus may be specifically a chip, a component, or a module, and the apparatus may include a processor and a memory that are connected with each other. The memory is configured to store computer-executable instructions. When the apparatus runs, the processor may execute the computer-executable instructions stored in the memory, so that the chip performs the signaling radio bearer configuration method and the sidelink data packet transmission method in the foregoing method embodiments.

The communication apparatus, the computer storage medium, the computer program product, or the chip provided in embodiments is configured to perform a corresponding method provided above. Therefore, for beneficial effects that can be achieved by the communication apparatus, the computer storage medium, the computer program product, or the chip, refer to beneficial effects of the corresponding method provided above. Details are not described herein again.

With reference to the foregoing descriptions, this application further provides the following embodiments.

Embodiment 1: An information transmission method is provided. The method is applied to a first device, and the method includes:

The first device performs interference measurement on a first time-frequency resource, to determine interference information, where the first time-frequency resource is determined based on configuration information of an interference measurement IM reference signal, the IM reference signal is used to measure interference of a channel, a time-frequency resource of the IM reference signal does not overlap a time-frequency resource of a non-zero power signal, the non-zero power signal is sent by a second device, and the second device is a device that has a same group identifier as the first device.

When the interference information is greater than a preset threshold, the first device determines that the channel is in a non-idle state.

Alternatively, when the interference information is less than or equal to the threshold, the first device determines that the channel is in an idle state.

Embodiment 2: In the method according to Embodiment 1, the IM reference signal is determined based on a group identifier of the second device.

Embodiment 3: In the method according to any one of Embodiments 1 and 2, the IM reference signal is a zero power reference signal.

Embodiment 4: In the method according to any one of Embodiments 1 to 3, the first time-frequency resource includes, in time domain, only the last n sub-time units in a time unit in which the IM reference signal is located, n is less than or equal to N/2, N is a quantity of sub-time units in the time unit, and N is a positive integer.

Embodiment 5: In the method according to any one of Embodiments 1 to 4, that the first device determines interference information includes:

The first device determines the interference information in the following manner:

$$P2=P1+10\log10(M2/M1),$$

where

P1 represents an interference power obtained by the first device through measurement on the first time-frequency resource, P2 represents the interference information, M2 is a measurement bandwidth in a channel contention mechanism, and M1 is a bandwidth occupied by the IM reference signal.

When P2 is greater than the threshold, the channel is in the non-idle state.

Alternatively, when P2 is less than or equal to the threshold, the channel is in the idle state.

Embodiment 6: An information transmission method is provided. The method is applied to a second device, and the method includes:

The second device generates a non-zero power signal, where a time-frequency resource of the non-zero power signal does not overlap a time-frequency resource of an interference measurement IM reference signal configured by the second device for a first device.

The second device sends the non-zero power signal to the first device, where the second device is a device that has a same group identifier as the first device.

Embodiment 7: In the method according to Embodiment 6, the interference measurement IM reference signal configured by the second device for the first device is determined based on a group identifier of the second device.

Embodiment 8: An information transmission method is provided. The method is applied to a first device in a communication system, the communication system further includes a second device, the second device is a device that has a same group identifier as the first device, and the method includes:

The first device receives a first reference signal from the second device, and measures total energy of a channel within the last M sub-time units of a time unit in which the first reference signal is located, where M is a positive integer.

The first device obtains a receive power of the first reference signal in the time unit.

The first device determines first interference signal strength based on the total energy of the channel within the last M sub-time units in the time unit in which the first reference signal is located and the receive power of the first reference signal in the time unit.

When the first interference signal strength is greater than a preset threshold, the first device determines that the channel is in a non-idle state.

Alternatively, when the first interference signal strength is less than or equal to the threshold, the first device determines that the channel is in an idle state.

Embodiment 9: In the method according to Embodiment 8, that the first device obtains a receive power of the first reference signal in the time unit includes:

The first device determines a frequency resource corresponding to the time unit in which the first reference signal is located.

The first device performs reference signal measurement on the frequency resource corresponding to the time unit in which the first reference signal is located, to obtain the receive power of the first reference signal in the time unit.

Embodiment 10: In the method according to Embodiment 8 or 9, that the first device determines the first interference signal strength based on the total energy of the channel within the last M sub-time units in the time unit in which the first reference signal is located and the receive power of the first reference signal in the time unit includes:

The first device determines, on a frequency resource on which data is transmitted in a group in which the first device and the second device are located, that the first interference signal strength is equal to a value obtained by subtracting the receive power of the first reference signal in the time unit from the total energy of the channel within the last M sub-time units in the time unit in which the first reference signal is located.

Alternatively, the first device determines, on a frequency resource on which no data is transmitted in the group in which the first device and the second device are located, that the first interference signal strength is equal to the total energy of the channel within the last M sub-time units in the time unit in which the first reference signal is located.

Embodiment 11: In the method according to any one of Embodiments 8 to 10, after the first device determines first interference signal strength, the method further includes:

The first device adjusts the first interference signal strength based on a power correspondence between a reference signal and a data signal, to obtain first interference signal strength after the adjustment.

The method further includes:

The first device determines, based on the first interference signal strength after the adjustment, whether the channel is in the idle state.

Embodiment 12: In the method according to any one of Embodiments 8 to 11, the first reference signal is a first channel demodulation reference signal DMRS.

Embodiment 13: In the method according to any one of Embodiments 8 to 12, the first reference signal is carried on a physical sidelink share channel or a physical sidelink control channel.

Embodiment 14: In the method according to any one of Embodiments 8 to 13, the method further includes:
The first device converts the first interference signal strength into an inter-group interference power in the following manner:

$$P2=P1+10\log10(M2/M1),$$

where
P1 represents the first interference signal strength, P2 represents the inter-group interference power, M2 is a measurement bandwidth in a channel contention mechanism, and M1 is a bandwidth occupied by the first reference signal.

When the inter-group interference power is greater than a preset threshold, the first device determines that the channel is in the non-idle state.

Alternatively, when the inter-group interference power is less than or equal to the threshold, the first device determines that the channel is in the idle state.

Embodiment 15: An information transmission method is provided. The method is applied to a first device, and the method includes:
The first device determines first interference signal strength of a channel used by the first device to send a message, where the first interference signal strength does not include second interference signal strength, the second interference signal strength is strength of an interference signal caused by a second device to the first device, and the second device is a device that has a same group identifier as the first device.

When the interference information is greater than a preset threshold, the first device determines that the channel is in a non-idle state.

Alternatively, when the interference information is less than or equal to the threshold, the first device determines that the channel is in an idle state.

Embodiment 16: An information transmission method is provided. The method is applied to a communication system, the communication system includes a first device and a second device, the second device is a device that has a same group identifier as the first device, and the method includes:

The second device configures a first time-frequency resource, where the first time-frequency resource is configuration information of an interference measurement IM reference signal, and the IM reference signal is used to measure interference of a channel.

The second device generates a non-zero power signal, and sends the non-zero power signal to the first device.

The first device performs interference measurement on the first time-frequency resource, to determine interference information, where the first time-frequency resource is determined based on the configuration information of the interference measurement IM reference signal, the IM reference signal is used to measure interference of a channel, and a time-frequency resource of the IM reference signal does not overlap a time-frequency resource of the non-zero power signal.

When the first interference signal strength is greater than a preset threshold, the first device determines that the channel is in a non-idle state.

Alternatively, when the first interference signal strength is less than or equal to the threshold, the first device determines that the channel is in an idle state.

Embodiment 17: An information transmission method is provided. The method is applied to a communication system, the communication system includes a first device and a second device, the second device is a device that has a same group identifier as the first device, and the method includes:

The second device sends a first reference signal to the first device.

The first device receives the first reference signal from the second device, and measures total energy of a channel within the last M sub-time units of a time unit in which the first reference signal is located, where M is a positive integer.

The first device obtains a receive power of the first reference signal in the time unit.

The first device determines first interference signal strength based on the total energy of the channel within the last M sub-time units in the time unit in which the first reference signal is located and the receive power of the first reference signal in the time unit.

When the first interference signal strength is greater than a preset threshold, the first device determines that the channel is in a non-idle state.

Alternatively, when the first interference signal strength is less than or equal to the threshold, the first device determines that the channel is in an idle state.

Embodiment 18: A communication apparatus is provided. The communication apparatus is a first device, and the apparatus includes at least one processor, and the at least one processor is coupled to at least one memory; and

the at least one processor is configured to execute a computer program or instructions stored in the at least one memory, so that the communication apparatus performs the method according to any one of Embodiments 1 to 5.

Embodiment 19: A communication apparatus is provided. The communication apparatus is a second device, and the apparatus includes at least one processor, and the at least one processor is coupled to at least one memory; and

the at least one processor is configured to execute a computer program or instructions stored in the at least one memory, so that the communication apparatus performs the method according to any one of Embodiments 6 and 7.

Embodiment 20: A communication system is provided. The communication system includes the first device according to Embodiment 18 and the second device according to Embodiment 19.

Embodiment 21: A communication apparatus is provided. The communication apparatus is a first device, and the apparatus includes at least one processor, and the at least one processor is coupled to at least one memory; and

the at least one processor is configured to execute a computer program or instructions stored in the at least one memory, so that the communication apparatus performs the method according to any one of Embodiments 8 to 14.

Embodiment 22: A computer-readable storage medium is provided. The computer-readable storage medium stores a computer program or instructions, and when a computer reads and executes the computer program or the instructions, the computer is enabled to perform the method according to any one of Embodiments 1 to 5, Embodiments 6 and 7, Embodiments 8 to 14, Embodiment 15, Embodiment 16, or Embodiment 17.

Embodiment 23: A chip is provided and includes a processor, configured to invoke a computer program from a memory and run the computer program, so that a communication device on which the chip is installed performs the method according to any one of Embodiments 1 to 5, Embodiments 6 and 7, Embodiments 8 to 14, Embodiment 15, Embodiment 16, or Embodiment 17.

Based on descriptions about the foregoing implementations, a person skilled in the art may understand that, for a purpose of convenient and brief description, division into the foregoing function modules is used as an example for illustration. In actual application, the foregoing functions may be allocated to different function modules and implemented according to a requirement. In other words, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed at different places. Some or all of the units may be selected according to actual requirements to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An information transmission method, wherein the method is applied to a first device, and the method comprises:

    performing, by the first device, interference measurement on a first time-frequency resource, to determine interference information, wherein the first time-frequency resource is determined based on configuration information of an interference measurement IM reference signal, the IM reference signal is used to measure interference of a channel, a time-frequency resource of the IM reference signal does not overlap a time-frequency resource of a non-zero power signal, the non-zero power signal is sent by a second device, and the second device is a device that has a same group identifier as the first device; and
    when the interference information is greater than a preset threshold, determining, by the first device, that the channel is in a non-idle state; or when the interference information is less than or equal to the threshold, determining, by the first device, that the channel is in an idle state.

2. The method according to claim 1, wherein the IM reference signal is determined based on a group identifier of the second device.

3. The method according to any one of claims 1 and 2, wherein the IM reference signal is a zero power reference signal.

4. The method according to any one of claims 1 to 3, wherein the first time-frequency resource comprises, in time domain, only the last n sub-time units in a time unit in which the IM reference signal is located, n is less than or equal to N/2, N is a quantity of sub-time units in the time unit, and N is a positive integer.

5. The method according to any one of claims 1 to 4, wherein determining, by the first device, interference information comprises:

    determining, by the first device, the interference information in the following manner:

$$P_2 = P_1 + 10\log10(M_2/M_1),$$

    wherein
    $P_1$ represents an interference power obtained by the first device through measurement on the first time-frequency resource, $P_2$ represents the interference information, $M_2$ is a measurement bandwidth in a channel contention mechanism, and $M_1$ is a bandwidth occupied by the IM reference signal; and
    when $P_2$ is greater than the threshold, the channel is in the non-idle state; or
    when $P_2$ is less than or equal to the threshold, the channel is in the idle state.

6. An information transmission method, wherein the method is applied to a second device, and the method comprises:

    generating, by the second device, a non-zero power signal, wherein a time-frequency resource of the non-zero power signal does not overlap a time-frequency resource of an interference measurement IM reference signal configured by the second device for a first device; and
    sending, by the second device, the non-zero power signal to the first device, wherein the second device is a device that has a same group identifier as the first device.

7. The method according to claim 6, wherein the IM reference signal is determined based on a group identifier of the second device.

8. An information transmission method, wherein the method is applied to a first device in a communication system, the communication system further comprises a second device, the second device is a device that has a same group identifier as the first device, and the method comprises:

    receiving, by the first device, a first reference signal from the second device, and measuring total energy of a channel within the last M sub-time units of a time unit in which the first reference signal is located, wherein M is a positive integer;
    obtaining, by the first device, a receive power of the first reference signal in the time unit;
    determining, by the first device, first interference signal strength based on the total energy of the channel within the last M sub-time units in the time unit in which the first reference signal is located and the receive power of the first reference signal in the time unit; and
    when the first interference signal strength is greater than a preset threshold, determining, by the first device, that the channel is in a non-idle state; or

when the first interference signal strength is less than or equal to the threshold, determining, by the first device, that the channel is in an idle state.

9. The method according to claim 8, wherein the obtaining, by the first device, a receive power of the first reference signal in the time unit comprises:

determining, by the first device, a frequency resource corresponding to the time unit in which the first reference signal is located; and performing, by the first device, reference signal measurement on the frequency resource corresponding to the time unit in which the first reference signal is located, to obtain the receive power of the first reference signal in the time unit.

10. The method according to claim 8 or 9, wherein the determining, by the first device, first interference signal strength based on the total energy of the channel within the last M sub-time units in the time unit in which the first reference signal is located and the receive power of the first reference signal in the time unit comprises:

determining, by the first device on a frequency resource on which data is transmitted in a group in which the first device and the second device are located, that the first interference signal strength is equal to a value obtained by subtracting the receive power of the first reference signal in the time unit from the total energy of the channel within the last M sub-time units in the time unit in which the first reference signal is located; or determining, by the first device on a frequency resource on which no data is transmitted in the group in which the first device and the second device are located, that the first interference signal strength is equal to the total energy of the channel within the last M sub-time units in the time unit in which the first reference signal is located.

11. The method according to any one of claims 8 to 10, wherein after the determining, by the first device, first interference signal strength, the method further comprises:

adjusting, by the first device, the first interference signal strength based on a power correspondence between a reference signal and a data signal, to obtain first interference signal strength after the adjustment; and

the method further comprises:
determining, by the first device based on the first interference signal strength after the adjustment, whether the channel is in the idle state.

12. The method according to any one of claims 8 to 11, wherein the first reference signal is a first channel demodulation reference signal DMRS.

13. The method according to any one of claims 8 to 12, wherein the first reference signal is carried on a physical sidelink share channel or a physical sidelink control channel.

14. The method according to any one of claims 8 to 13, wherein the method further comprises:

converting, by the first device, the first interference signal strength into an inter-group interference power in the following manner:

$$P_2 = P_1 + 10\log10(M_2/M_1),$$

wherein
$P_1$ represents the first interference signal strength, $P_2$ represents the inter-group interference power, $M_2$ is a measurement bandwidth in a channel contention mechanism, and $M_1$ is a bandwidth occupied by the first reference signal; and
when the inter-group interference power is greater than a preset threshold, determining, by the first device, that the channel is in the non-idle state; or
when the inter-group interference power is less than or equal to the threshold, determining, by the first device, that the channel is in the idle state.

15. An information transmission method, wherein the method is applied to a first device, and the method comprises:

determining, by the first device, first interference information strength of a channel used by the first device to send a message, wherein the first interference information strength does not comprise second interference information strength, the second interference information strength indicates interference caused by a second device to the first device, and the second device is a device that has a same group identifier as the first device; and
when the interference information is greater than a preset threshold, determining, by the first device, that the channel is in a non-idle state; or
when the interference information is less than or equal to the threshold, determining, by the first device, that the channel is in an idle state.

16. An information transmission method, wherein the method is applied to a communication system, the communication system comprises a first device and a second device, the second device is a device that has a same group identifier as the first device, and the method comprises:

configuring, by the second device, a first time-frequency resource, wherein the first time-frequency resource is configuration information of an interference measurement IM reference signal, and the IM reference signal is used to measure interference of a channel;

generating, by the second device, a non-zero power signal, and sending the non-zero power signal to the first device, wherein a time-frequency resource of the non-zero power signal does not overlap a time-frequency resource of the IM reference signal;

performing, by the first device, interference measurement on the first time-frequency resource, to determine interference information; and

when the first interference signal strength is greater than a preset threshold, determining, by the first device, that the channel is in a non-idle state; or

when the first interference signal strength is less than or equal to the threshold, determining, by the first device, that the channel is in an idle state.

17. An information transmission method, wherein the method is applied to a communication system, the communication system comprises a first device and a second device, the second device is a device that has a same group identifier as the first device, and the method comprises:

sending, by the second device, a first reference signal to the first device;

receiving, by the first device, the first reference signal from the second device, and measuring total energy of a channel within the last M sub-time units of a time unit in which the first reference signal is located, wherein M is a positive integer;

obtaining, by the first device, a receive power of the first reference signal in the time unit;

determining, by the first device, first interference signal strength based on the total energy of the channel within the last M sub-time units in the time unit in which the first reference signal is located and the receive power of the first reference signal in the time unit; and

when the first interference signal strength is greater than a preset threshold, determining, by the first device, that the channel is in a non-idle state; or

when the first interference signal strength is less than or equal to the threshold, determining, by the first device, that the channel is in an idle state.

18. A communication apparatus, wherein the communication apparatus is a first device, the apparatus comprises at least one processor, and the at least one processor is coupled to at least one memory; and the at least one processor is configured to execute a computer program or instructions stored in the at least one memory, so that the communication apparatus performs the method according to any one of claims 1 to 5.

19. A communication apparatus, wherein the communication apparatus is a second device, the apparatus comprises at least one processor, and the at least one processor is coupled to at least one memory; and the at least one processor is configured to execute a computer program or instructions stored in the at least one memory, so that the communication apparatus performs the method according to any one of claims 6 and 7.

20. A communication system, wherein the communication system comprises the first device according to claim 18 and the second device according to claim 19.

21. A communication apparatus, wherein the communication apparatus is a first device, the apparatus comprises at least one processor, and the at least one processor is coupled to at least one memory; and the at least one processor is configured to execute a computer program or instructions stored in the at least one memory, so that the communication apparatus performs the method according to any one of claims 8 to 14.

22. A computer-readable storage medium, wherein the computer-readable storage medium stores a computer program or instructions, and when a computer reads and executes the computer program or instructions, the computer is enabled to perform the method according to any one of claims 1 to 5, or claims 6 and 7, or claims 8 to 14, or claim 15, or claim 16, or claim 17.

23. A chip, comprising a processor, configured to invoke a computer program from a memory and run the computer program, wherein a communication device on which the chip is installed is enabled to perform the method according to any one of claims 1 to 5, or claims 6 and 7, or claims 8 to 14, or claim 15, or claim 16, or claim 17.

FIG. 1

FIG. 2

FIG. 3

FIG. 4a

FIG. 4b

FIG. 4c

FIG. 5a

China Mobile 4G                    8:08

Settings

✈  Airplane mode          ⬤ OFF

📶  **Wi-Fi**               ⬤ OFF

✳  Bluetooth              ⬤ OFF

((•))  Personal hotspot        〉

📶  Mobile network          〉

🌙  Do not disturb          〉

☀  Display & brightness     〉

✈  Connect to a group device   ⬤ ON

🔊  Sound                〉

🔒  Privacy               〉

←        ⌂        ≡

FIG. 5b

FIG. 5c

FIG. 6

FIG. 7a

FIG. 7b

| Second device | First device |
| --- | --- |
| 801: The second device configures a CSI-IM pattern | |
| | 802: The first device obtains CSI-IM configuration information |
| | 803: The first device performs interference measurement on a first time-frequency resource, to determine interference information |
| | 804: The first device determines, based on the interference information, whether a channel is in an idle state |

FIG. 8

Second device

First device

901: The second device sends a first reference signal to the first device

902: The first device receives the first reference signal from the second device, and measures total energy of a channel within the last M sub-time units of a time unit in which the first reference signal is located

903: The first device obtains a receive power of the first reference signal in the time unit

904: The first device determines first interference signal strength based on the total energy of the channel within the last M sub-time units of the time unit in which the first reference signal is located and the receive power of the first reference signal in the time unit

905: The first device determines, based on the first interference signal strength, whether the channel is in an idle state

FIG. 9

GH

GM

FIG. 10

FIG. 11

A time-frequency
resource occupied by
an interference signal

FIG. 12a

A time-frequency
resource occupied by
an interference signal

FIG. 12b

A time-frequency
resource occupied by
an interference signal

FIG. 12c

FIG. 13

Measure a
DMRS RSRP
on each port

Measure an RSSI in
the last symbol

FIG. 14

1500

First device

1501

Determining
module

1502

Judging
module

FIG. 15

1600

Second device

1601

Obtaining
module

1502

Sending
module

FIG. 16

1700

First device

1701        1702

Receiving module

Measurement module

1704        1703

Judging module

Determining module

FIG. 17

Communication apparatus 800

810

Processor

840

820

Memory

Bus system

830

Transceiver

FIG. 18

FIG. 19

## INTERNATIONAL SEARCH REPORT

| | International application No. |
|---|---|
| | **PCT/CN2021/107545** |

| **A.** | **CLASSIFICATION OF SUBJECT MATTER** |
|---|---|

H04W 72/04(2009.01)i

According to International Patent Classification (IPC) or to both national classification and IPC

| **B.** | **FIELDS SEARCHED** |
|---|---|

Minimum documentation searched (classification system followed by classification symbols)

H04W; H04L; H04Q; H04M

Documentation searched other than minimum documentation to the extent that such documents are included in the fields searched

Electronic data base consulted during the international search (name of data base and, where practicable, search terms used)

CNKI, CNPAT, EPODOC, WPI, 3GPP: 干扰, 测量, 非零功率信号, 组, 空闲, 重叠, 功率, 信道, 侧链路, 副链路, 组播, interference measurement, IM, non zero power, NZP, group, idle, overlap, power, channel, sidelink, groupcast

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| A | WO 2020125931 A1 (NOKIA TECHNOLOGIES OY) 25 June 2020 (2020-06-25) page 9 paragraph 4 from the bottom to page 19 paragraph 3, figures 1-11 | 1-23 |
| A | CN 111294773 A (HUAWEI TECHNOLOGIES CO., LTD.) 16 June 2020 (2020-06-16) entire document | 1-23 |
| A | CN 110945793 A (TELEFONAKTIEBOLAGET LM ERICSSON (PUBL)) 31 March 2020 (2020-03-31) entire document | 1-23 |
| A | CN 109150450 A (HUAWEI TECHNOLOGIES CO., LTD.) 04 January 2019 (2019-01-04) entire document | 1-23 |
| A | ERICSSON. "Support of Unicast, Groupcast and Broadcast on the NR Sidelink" *3GPP TSG-RAN WG1 Meeting #94-Bis Tdoc R1-1811591*, 31 October 2018 (2018-10-31), entire document | 1-23 |

| ☐ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 October 2021** | **20 October 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2021/107545** |

| Patent document cited in search report | | | Publication date (day/month/year) | Patent family member(s) | | | Publication date (day/month/year) |
| --- | --- | --- | --- | --- | --- | --- | --- |
| WO | 2020125931 | A1 | 25 June 2020 | None | | | |
| CN | 111294773 | A | 16 June 2020 | WO | 2020119446 | A1 | 18 June 2020 |
| CN | 110945793 | A | 31 March 2020 | JP | 2020523885 | A | 06 August 2020 |
| | | | | WO | 2018229078 | A1 | 20 December 2018 |
| | | | | EP | 3639381 | A1 | 22 April 2020 |
| | | | | US | 2021143870 | A1 | 13 May 2021 |
| CN | 109150450 | A | 04 January 2019 | EP | 3567787 | A1 | 13 November 2019 |
| | | | | US | 2020008091 | A1 | 02 January 2020 |
| | | | | WO | 2018228293 | A1 | 20 December 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010837798
- CN 202011552746